# EUROPEAN PATENT SPECIFICATION

(11) **EP 4 641 456 B1**
(45) Date of publication and mention of the grant of the patent: **11.11.2026**
(21) Application number: 24382466.1
(22) Date of filing: 26.04.2024
(51) Int. Cl.: G06Q 10/04, G01W 1/10, G06F 16/29, G06N 3/044, G06N 3/045, G06N 3/08, G06N 20/00

(54) **BAD ODOUR PREDICTION**
VORHERSAGE SCHLECHTER GERÜCHE
PRÉDICTION DE MAUVAISES ODEURS

(43) Date of publication of application: 29.10.2025
(73) Proprietor: Fundació Eurecat, 08290 Cerdanyola del Vallès (ES)
(72) Inventor: PALACÍN ALIANA, Ian, 25004 LLEIDA (ES); NIEVAS VIÑALS, Nuria, 25003 LLEIDA (ES); CULLA LOREN, Marta, 25003 LLEIDA (ES); DE LUCAS FIGUERAS, Isabel, 43460 ALCOVER (ES); SANS PONS, Carles, 08005 BARCELONA (ES)
(74) Representative: ZBM Patents - Zea, Barlocci & Markvardsen

(56) References cited:
- US-A1- 2020 400 631
- US-A1- 2022 074 914
- US-A1- 2023 304 982
- US-A1- 20240 046 143

## Description

The present disclosure relates to methods of predicting bad odour in a geographical area, and to computer programs, systems and computing systems suitable to perform such methods of predicting bad odour in a geographical area.

### BACKGROUND

Pollution due to bad odour episodes, also known as odour pollution, is an increasingly worrying environmental problem that affects both the environment and human health. This pollution is produced by the release of volatile organic compounds and other odoriferous gases into the air, mainly as a result of human activities such as industrial activities (oil refineries, chemical plants, paper mills, food processing), agriculture (livestock farming, use of fertilizers and pesticides, decomposition of organic waste), waste management (landfills, incinerators, wastewater treatment plants), other sources such as, e.g., natural gas leaks, forest fires, vehicle emissions, etc.

Bad odour episodes may have impact on the environment in form of, e.g., air quality degradation, damage to vegetation, disturbance of ecosystems, etc. Air quality degradation may be caused by volatile organic compounds reacting with other pollutants in the atmosphere to form ozone and smog, which may contribute to acidification of rain, climate change and other respiratory problems. Damage to vegetation may be derived from some odorous gases which may be toxic to plants and affect their growth and reproduction. Disturbance of ecosystems may be originated from unpleasant odours which may disturb the behaviour of animals, such as their ability to find food or a mate.

Bad odour episodes may have impact on human health in form of, e.g., discomfort and reduced quality of life, respiratory problems, psychological effects, reduced property values, etc. Discomfort and reduced quality of life may be due to unpleasant odours which may cause discomfort, eye, nose and throat irritation, nausea, vomiting and headaches. Respiratory problems may be caused by long-term exposure to some volatile organic compounds which may worsen asthma, bronchitis and other respiratory diseases. Psychological effects may be derived from unpleasant odours which may cause stress, anxiety and depression. Reduced property values may affect properties located near sources of odour pollution which may have lower values than those located in areas with better air quality.

US2024046143A1 describes systems and methods for generating high-resolution concentration maps of atmospheric gas i.e. nitrogen dioxide by using geography-informed machine learning used for monitoring plant growth, involves determining predicted atmospheric gas concentration values for atmospheric gas by GIML model.

An object of the disclosure is to provide innovative methods, computer programs, systems and computing systems aimed at predicting bad odour in a geographical area in order to, e.g., control or technically actuate on process or processes potentially causing or worsening the predicted bad odour.

### SUMMARY

In a first aspect, methods are provided of predicting bad odour in a geographical area. These methods (also denominated "predicting methods" herein) comprise forming a training dataset comprising data rows each including example input data and target output data. The example input data includes past sensor data generated in the geographical area from environmental or meteorological sensors during a past time interval. The target output data includes past observation data representing bad odour observations generated in the geographical area during a past time period posterior to the past time interval. In each of the data rows, the target output data included therein may define expected output for its related example input data in the data row.

Predicting methods may further comprise configuring a computing module computationally implementing a predictor model based on training said predictor model using or depending on the (previously formed) training dataset.

Predicting methods may still further comprise building a production dataset comprising production input data including present sensor data generated in the geographical area from the environmental or meteorological sensors during a present time interval, and providing said production dataset to the configured computing module to cause the trained predictor model to output bad odour prediction.

The expression "bad odour prediction" may refer to a prediction of whether bad odour will occur or will not occur (binary output form) and, optionally, data characterizing the predicted bad odour. Said characterizing data may include one or more of following data: type, subtype, magnitude, intensity, hedonic tone of the predicted bad odour, location/region within the geographical area indicating where the bad odour is predicted to occur, probability of occurrence of the predicted bad odour (probabilistic output form). Which adjustments to be done and how to implement them in corresponding ML technique/approach to train the predictor model(s) to infer such a probability are known in the technical field at hand, so no details on said matter are provided in present disclosure.

Hereinafter, for conciseness reasons, the environmental or meteorological sensors may be simply denominated environmental sensors.

Such new predicting methods proposed herein aim at configuring a computing module to make it computationally behave as a real-time (or almost/near real-time) predictor of whether bad odour will or will not occur in short/mid-term and, optionally, of data characterizing the predicted bad odour. This configuration is achieved by providing suitable training data to predictor model(s) implemented at/by the computing module. These training data include bad odour observations denoting at least whether bad odour was perceived or not perceived by humans and, for each of said observations or groupings thereof, sensor data defining an environmental scenario in which bad odour was or was not perceived.

Any known Machine Learning (ML) technique or approach may be used to perform such a training of the predictor model(s) to make it/them to map or correlate input sensor data to output observation data expected for said input, thereby causing the predictor model(s) to converge towards tuning of internal rules, weights, parameters, etc. implementing the targeted computational behaviour. Which ML approach(es) may be used and how to implement it/them is a known matter in the technical field at hand, so no details on that are provided herein. Central question here is the manner according to which the training is performed, by selecting proper training data and their structuring to achieve an effective training and posterior computational behaviour pursued.

Exhaustive experiments revealed that, the feature of forming the training dataset with input sensor data generated certain time before the output observation(s) assigned to said input as expected output were generated, surprisingly led to very good training results. It was empirically confirmed that the predictor model(s) resulted very effectively trained in terms of producing very reliable predictions. This unexpected beneficial effect of including said time lag/offset between when input sensor data were generated and when output observation data expected for said input were generated makes predicting methods according to present disclosure differential and better than prior art methods aimed at same or similar purpose.

On one hand, operation of the trained predictor model(s) in inference/production time to predict whether bad odour will occur or not in future time, i.e., posterior to current time, is reasonably fast. Training is the main time-consuming stage in predicting methods according to present disclosure. On another hand, the prediction is inferred by the trained predictor model(s) depending on sensor data generated during present time interval from start time to end time immediately or almost immediately prior to current time. Therefore, another benefit of predicting methods according to this disclosure is that the bad odour prediction is produced in real time or almost/near real time.

Environmental sensors may include one or more of following sensor types: solar radiation sensor, ultraviolet index sensor, wind direction sensor, wind speed sensor, wind gust sensor, humidity sensor, temperature sensor, thermal sensation sensor, dew point sensor, atmospheric pressure sensor, rain or precipitation sensor, chemical compound sensor. Sensor data from any of said sensors may further include location of where sensor measurements included in or represented by the sensor data were generated in the geographical area. Environmental sensors may belong to different environmental/meteorological stations distributed within the geographical area.

For reasons of training-inference consistency, sensor data included in production dataset (either transformed or not transformed) at inference/prediction time may be coherent with sensor data used to train the predictor model(s). For example, if the training dataset included past sensor data corresponding to wind direction, wind speed, humidity and temperature sensor data, the production dataset may include present sensor data corresponding to wind direction, wind speed, humidity and temperature sensor data.

Observation data that are included in each of the data rows of the training dataset may comprise one or more of following data: indicator of whether bad odour was or was not perceived/observed (to implement binary output form), type, subtype, magnitude, intensity, hedonic tone of the perceived/observed bad odour, location of where observation was generated within the geographical area. Concepts behind these different observation data (indicator, type, subtype, etc.) and possible values and interpretations thereof are described in other parts of the disclosure.

For reasons of training-inference consistency, observation data included in production dataset (either transformed or not transformed) at inference/prediction time may be coherent with observation data used to train the predictor model(s). For example, if the training dataset included past observation data corresponding to indicator of whether bad odour was or was not perceived and type, intensity and hedonic tone of the perceived bad odour, the production dataset may include present observation data corresponding to indicator of whether bad odour has been or has not been perceived and type, intensity and hedonic tone of the perceived bad odour.

Similarly, prediction data (to be) outputted by the trained predictor model(s) may keep coherence with observation data used to train the predictor model(s). For example, if the training dataset included past observation data corresponding to indicator of whether bad odour was or was not perceived and type, intensity and hedonic tone of the perceived bad odour, the prediction data (to be) outputted by the trained predictor model(s) may include data corresponding to indicator of whether bad odour is predicted to occur or not occur and type, intensity and hedonic tone of the predicted bad odour.

According to a calendar-referenced approach, the forming of the training dataset may further comprise, for each of the data rows, including in the example input data of the data row a date-time reference representing the past time interval during which the past sensor data in the data row were generated, in such a manner that the predictor model is trained further depending on said date-time reference. For reasons of training-inference consistency, the building of the production dataset may further comprise including in the production input data a date-time referral representing the present time interval during which the present sensor data in the production input data have been generated to cause the trained predictor model(s) to output the bad odour prediction further depending on said date-time referral.

Beneficial effects of such a calendar-referenced approach may be or include, e.g., provision to the training of the predictor model(s) a calendar-dependent perspective that may make the predictor model(s) computationally behave in one or another manner depending on, e.g., current day and time. Industrial processes performed by a certain industrial activity can have patterns related to the weekly calendar or time of day. For example, holidays or weekends can be different from weekdays, or night different from day. In addition, they are parameters that also depend on the geographical area because the holiday calendar can be different. With such a calendar-referenced approach, the predictor model(s) may thus be trained to behave in one way or another depending on, e.g., if current day is holiday day or weekend or weekday, etc.

According to a location-clustering approach, sensor and observation data that are included in each of the data rows of the training dataset may be clustered by location of where sensor measurements and observations were generated in the geographical area, so as to territorialize said data into different predefined regions within the geographical area. In production/prediction time, sensor data that are included in the production dataset may need to be consistent with sensor data used to train the predictor model(s) and, hence, sensor data in the production dataset may be also clustered by location of where sensor measurements were generated, according to what is denominated herein location-clustering approach.

Such predefined regions within the geographical area may have been determined in such a manner that each of said predefined regions includes an industrial installation performing an industrial process which is known to potentially cause bad odour or worsening thereof. In this case, predictor model(s) may produce, in inference/production time one or more predictions for each of the predefined regions.

Advantageous effects of such a location-clustering approach may be or include, e.g., provision to the training of the predictor model(s) a multi-region or multi-installation perspective to infer customized predictions restricted to each or at least some of the predefined regions and/or to assess inter-regions relations from bad smell risk or potentiality thereof. Having several predefined regions and clustering the data involved in the training and inference by location denoting at which of the regions they were generated may make it possible to differentiate areas affected by an episode of bad smell. It is possible, e.g., that in one region there are enough observations to confirm that an episode occurred and, instead, in another region it can be inferred that no episode occurred, and the predictor model(s) can learn from that. Another useful aspect is that impact that the predicted episode may have in volume of affected population may be limited and, therefore, better affordable.

In an odour-type-clustering approach, observation data included in each of the data rows of the training dataset may be clustered by observations' odour type to structure the observation data into different predefined odour types.

Useful effects of such an odour-type-clustering approach may be or include, e.g., provision to the training of the predictor model(s) knowledge or inference skills on discernment among different odours which may probably have different origins. Clustering by type of smell can be used to, e.g., segment when there is more than one industrial activity or when there is more than one industrial process in the geographical area. It may happen that there were two episodes caused by two different activities at the same time and that the types of odours were different. It is also possible that there is an episode with one type of smell and that a few days later there is another episode with another type of smell. All these are therefore refinements that allow the predictor model(s) to be better trained when, e.g., there is more than one industrial activity in the geographical area. Different types of odours could also be due to two different processes of the same industrial activity. In this case, in a single-focus geographic area, it may allow discerning which process has caused the episode. The predictor model(s) may then be trained for a specific process.

Other clustering approaches are possible based on same or similar principles as those described with respect to location-clustering and odour-type-clustering approaches. Regarding observation data, clustering thereof may be performed by one or more of bad odour indicator and type, subtype, magnitude, intensity, hedonic tone of the bad odour. In relation to sensor data, clustering thereof may be performed by one or more of solar radiation, ultraviolet index, wind direction, wind speed, wind gust, humidity, temperature, thermal sensation, dew point, atmospheric pressure, rain or precipitation, chemical compound measurements.

For reasons of training-inference consistency, the different types of clustering performed (according to any of the described clustering approaches) on past sensor and/or observation data in training dataset (at training stage) may be accordingly performed on present sensor and/or observation data in production dataset (at inference stage).

Similarly, prediction data (to be) outputted by the trained predictor model(s) may keep coherence with observation data clustered at training stage and inference stage. For example, if observation data were or have been clustered at training stage and inference stage by location/region and type, prediction data (to be) outputted by the trained predictor model(s) may include output data representing bad odour predictions also clustered by location/region and type.

Any of the clustering approaches described herein may include aggregating data for each of the clusters determined. Said aggregations (e.g., accumulated sums, averages, means, medians, etc.) may be performed on observation and/or sensor data representing an amount, quantity, magnitude, etc. For example, each of the clusters determined according to odour-type-clustering approach may include aggregation data corresponding to accumulated and averaged intensity and magnitude, accumulated and averaged temperature and humidity, etc. As accurately described in other parts of the disclosure, coherence between data used in training stage and in inference stage and data corresponding to prediction results may be ensured.

In some examples, the forming of the training dataset may further comprise, for each of the data rows, obtaining historical observation data representing bad odour observations generated in the geographical area prior to, or during and prior to, the past time period during which the past observation data in the data row were generated. Then, mathematical transformations may be performed on the historical observation data obtained for each of the data rows to generate autocorrelated past observation data defining retrospective behaviour patterns of the past observation data in the data row. This way, the training of the predictor model(s) is performed further depending on said autocorrelated past observation data included in the example input data of each data row. This training (and subsequent prediction) mode may be denominated retrospective-observation approach herein.

In production/prediction time, the production dataset may need to be consistent with the training previously performed according to the retrospective-observation approach. Therefore, the building of the production dataset may further comprise obtaining preterit observation data representing bad odour observations generated in the geographical area during and prior to the present time interval. Then, mathematical transformations may be performed on the obtained preterit observation data to produce autocorrelated preterit observation data defining retrospective behaviour patterns of the preterit observation data. It is thus caused that bad odour prediction(s) is/are inferred further depending on said autocorrelated preterit observation data included in the production input data, according to what is herein denominated retrospective-observation approach.

On one hand, historical observation data obtained for each of the data rows (in the training dataset) may include observations each of which was generated during a time period in a time-continuous series of time periods having a most recent time period, the time-continuous series including the past time period as the most recent time period and successive time periods prior to the past time period or, alternatively, only the successive time periods prior to the past time period, in which case the most recent time period is the successive time period immediately preceding in time the past time period.

On another hand, the preterit observation data may include observations each of which was generated during a time interval in a time-continuous sequence of time intervals having a most recent time interval, the time-continuous sequence including the present time interval as the most recent time interval and successive time intervals prior to the present time interval.

Taking the above into account, the performing of the mathematical transformations may comprise performing one or more of the following mathematical transformations as described below.

One of the mathematical transformations on the historical observation data in each of the data rows may include calculating an accumulated sum of observations denoting occurrence of bad odour that were generated within the time-continuous series or a time-continuous part thereof from its most recent time period backwards in time until a final time period in the time-continuous series. For reasons of training-inference consistency, said calculation may be also performed on the preterit observation data by calculating an accumulated sum of observations denoting occurrence of bad odour that were generated within the time-continuous sequence or a time-continuous part thereof from its most recent time interval backwards in time until a final time interval in the time-continuous sequence. This final time period/interval may correspond to oldest time period/interval in the time-continuous series/sequence.

Another of the mathematical transformations on the historical observation data in each of the data rows may include calculating a sliding average of observations denoting occurrence of bad odour that were generated within a predefined time range in the time-continuous series from its most recent time period backwards in time. This predefined time range may correspond to, e.g., a last time length with respect to the past time period to which the data row refers. For reasons of training-inference consistency, said calculation may be also performed on the preterit observation data by calculating a sliding average of observations denoting occurrence of bad odour that were generated within a predefined time range in the time-continuous sequence from its most recent time interval backwards in time. This predefined time range may correspond to, e.g., a last time length with respect to the present time interval to which the production input data refers.

A further one of the mathematical transformations on the historical observation data in each of the data rows may include determining a number of contiguous time periods in the time-continuous series from its most recent time period backwards in time until a final time period, wherein the observations generated within each of said contiguous time periods denoting occurrence of bad odour and the observations generated within said final time period denoting non-occurrence of bad odour. For reasons of training-inference consistency, said determination may be also performed on the preterit observation data by determining a number of contiguous time intervals in the time-continuous sequence from its most recent time interval backwards in time until a final time interval, wherein the observations generated within each of said contiguous time intervals denote occurrence of bad odour and the observations generated within said final time interval denote non-occurrence of bad odour.

Another one of the mathematical transformations on the historical observation data in each of the data rows may include determining a time length spanning contiguous time periods in the time-continuous series from its most recent time period backwards in time until a final time period, wherein the observations generated within each of said contiguous time periods denoting non-occurrence of bad odour and the observations generated within said final time period denoting occurrence of bad odour. For reasons of training-inference consistency, said determination may be also performed on the preterit observation data by determining a time length spanning contiguous time intervals in the time-continuous sequence from its most recent time interval backwards in time until a final time interval, wherein the observations generated within each of said contiguous time intervals denote non-occurrence of bad odour and the observations generated within said final time interval denote occurrence of bad odour.

Profitable effects of such a retrospective-observation approach may be or include, e.g., increasing of performance and effectiveness of predictions outputted by the trained predictor model(s) from observation data perspective. Retrospective-observation approach may permit, e.g., making the predictor model(s) to differentiate delay effects in observations, complement long-lasting relationships between observations, identify periodic and/or cyclical behaviours of observations, account for non-linear dependencies between sensor and observation data, be more robust against noise or outliers in specific observations, etc.

According to examples, mathematical conversions may be also performed on sensor data intervening in predicting method in similar manner as described in relation to the retrospective-observation approach. This strategy based on mathematically converting sensor data may be denominated retrospective-sensing approach herein.

According to the retrospective-sensing approach, the forming of the training dataset may further comprise, for each of the data rows, obtaining historical sensor data generated in the geographical area from the environmental sensors either prior to the past time interval or during and prior to the past time interval during which the past sensor data in the data row were generated. Then, mathematical conversions may be performed on the historical sensor data obtained for each of the data rows to produce autocorrelated past sensor data defining retrospective behaviour patterns of the past sensor data in the data row. This manner, the training of the predictor model(s) is performed further depending on said autocorrelated past sensor data included in the example input data of each data row.

In production/prediction time, the production dataset may require to be consistent with the training previously performed according to the retrospective-sensing approach. Therefore, the building of the production dataset may further comprise obtaining preterit sensor data generated in the geographical area from the environmental sensors either prior to the present time interval or during and prior to the present time interval. Then, mathematical conversions may be performed on the obtained preterit sensor data to produce autocorrelated preterit sensor data defining retrospective behaviour patterns of the preterit sensor data. It is thus caused that bad odour prediction(s) is/are inferred further depending on said autocorrelated preterit sensor data included in the production input data.

On one hand, the historical sensor data obtained for each of the data rows may include sensor measurements each of which was generated during a time frame in a continuous-in-time series of time frames having a most recent time frame, the continuous-in-time series including the past time interval as the most recent time frame and successive time frames prior to the past time interval or, alternatively, only the successive time frames prior to the past time interval, in which case the most recent time frame is the successive time frame immediately preceding in time the past time interval.

On another hand, the preterit sensor data may include sensor measuring values each of which was generated during a timespan in a continuous-in-time sequence of timespans having a most recent timespan, the continuous-in-time sequence including the present time interval as the most recent timespan and successive timespans prior to the present time interval or, alternatively, only the successive timespans prior to the present time interval, in which case the most recent timespan is the successive timespan immediately preceding in time the present time interval.

Taking the above into account, the performing of the mathematical conversions may comprise performing one or more of the following mathematical conversions as described below.

One of the mathematical conversions on the historical sensor data in each of the data rows may include calculating, for each sensor measurement type, an average value and/or a standard deviation and/or a logarithm value of the sensor measurements of said type that were generated within the continuous-in-time series or a time-continuous part thereof from its most recent time frame backwards in time until a final time frame in the continuous-in-time series. For reasons of training-inference consistency, said calculation may be also performed on the preterit sensor data by calculating, for each sensor measuring type, an average value and/or a standard deviation and/or a logarithm value of the sensor measuring values of said type that were generated within the continuous-in-time sequence or a time-continuous part thereof from its most recent timespan backwards in time until a final timespan in the continuous-in-time sequence.

Another of the mathematical conversions on the historical sensor data in each of the data rows may include determining, for each sensor measurement type, a maximum value and/or a minimum value of the sensor measurements of said type that were generated within the continuous-in-time series or a time-continuous part thereof from its most recent time frame backwards in time until a final time frame in the continuous-in-time series. For reasons of training-inference consistency, said determination may be also performed on the preterit sensor data by determining, for each sensor measuring type, a maximum value and/or a minimum value of the sensor measuring values of said type that were generated within the continuous-in-time sequence or a time-continuous part thereof from its most recent timespan backwards in time until a final timespan in the continuous-in-time sequence.

Favourable effects of such a retrospective-sensing approach may be or include, e.g., increasing of performance and effectiveness of predictions outputted by the trained predictor model(s) from sensor data perspective. Retrospective-sensing approach may permit, e.g., making the predictor model(s) to differentiate delay effects in sensor data, complement long-lasting relationships between sensor data, identify periodic and/or cyclical behaviours of sensor data, account for non-linear dependencies between sensor data and observations, be more robust against noise or outliers in specific sensor data, etc.

Any of the retrospective approaches described herein may include performing mathematical transformations/conversions on any of the different types of data used or usable in training stage and inference stage. Said transformations, conversions (e.g., accumulated sums, averages, means, medians, etc.) may be performed on observation and/or sensor data representing an amount, quantity, magnitude, etc. For example, any of the mathematical transformations/conversions proposed herein may be performed on one or more of magnitude, intensity, hedonic tone of the perceived/observed bad odour, solar radiation, ultraviolet index, wind direction, wind speed, wind gust, humidity, temperature, thermal sensation, dew point, atmospheric pressure, rain or precipitation, chemical compound measurements. As accurately described in other parts of the disclosure, coherence between data used in training stage and in inference stage and data corresponding to prediction results may be ensured.

Apart from the aforementioned aggregations on single type of data (or variable), aggregations combining different types of data (or variables) may be performed. For example, arithmetic transformations depending on wind speed, wind direction, wind gust, temperature, etc. may be made. Also or alternatively, differences between averages, means, medians, maximums, minimums, etc. of different types of data may be performed. Any of the mathematical transformations/conversions described herein may be performed on any of the different sensor/observation data involved in training stage (both example input data and target output data) and in inference stage (production input data). Also, coherence between past sensor/observation data types/variables used in training stage and those present sensor/observation data types/variables provided to the trained prediction model(s) at inference stage may be kept. That is, every type of data used in training stage is also involved in inference stage. In other words, example input data used in training stage keeps consistency with production input data used in inference stage (i.e. input data not used in training is not used in inference either), and target output data used in training keeps coherence with prediction data outputted or to be outputted by the trained model(s) (i.e. output data not used in training is not outputted by the trained predictor model(s) at inference stage).

In a lagged approach, one or more lags may be added to sensor data involved in the training of the predictor model(s) and in the inference by the predictor model(s) as described below.

On one hand, each of the data rows in the training dataset refers to a past time interval during which the past sensor data in the data row were generated, and the past time intervals to which all the data rows refer conform a time-continuous series of past time intervals. On another hand, the production dataset refers to a present time interval during which the present sensor data in the production dataset have been generated, said present time interval being part of a time-continuous series of present time intervals during each of which corresponding present sensor data have been generated.

Taking the above into account, the forming of the training dataset may further comprise, for each of the data rows, including in the example input data of the data row the past sensor data of a quantity of contiguous data rows immediately preceding the data row. Said quantity of contiguous data rows may be a number between 0 and 8 of contiguous data rows. For reasons of training-inference consistency, the building of the production dataset may further comprise including in the production input data of the production dataset the present sensor data that have been generated during a quantity of contiguous present time intervals immediately preceding the present time interval to which the production dataset refers. Said quantity of contiguous present time intervals may be a number between 0 and 8 of contiguous present time intervals.

Beneficial effects of such a lagged approach may be or include the same or similar effects as those commented in relation to retrospective-sensing approach.

In some implementations, data used to train the predictor model(s) and data provided to the trained predictor model(s) to infer prediction(s) may result very large dimensionally. In this case, a dimensionality reduction may be performed on said data. Any known technique aimed at doing so, i.e., to compress involved data while retaining meaningful properties thereof from training-inference perspective may be used. Said techniques are known in the technical at hand, so no detailed information is provided thereon in this disclosure. This principle may be denominated dimensionality-reduction approach herein.

Approaches described herein based on transforming sensor/observation data or adding further sensor/observation data to be used in the training of the predictor model(s) and in the inference by the predictor model(s) are the retrospective-observation approach, the retrospective-sensing approach and the lagged approach. In combinations of any of said approaches with one or more of the location-clustering approach and odour-type-clustering approach, the clustering may be performed before corresponding transformations of sensor/observation data and/or additions of further sensor/observation data. That is, sensor/observation data to be transformed may be transformed once they have been clustered. Similarly, further sensor/observation data to be added may be added once they have been clustered.

In some examples, methods of controlling an industrial process performed by/at an industrial installation in a geographical area may also be provided. These methods (also denominated controlling methods herein) may comprise performing any of the predicting methods disclosed herein to obtain a bad odour prediction in the geographical area, and controlling the industrial process depending on said prediction. It may be verified whether the obtained bad odour prediction denotes future occurrence of bad odour and, in said case, the industrial process may be controlled to eliminate or reduce the predicted bad odour.

The controlling of the industrial process may include, e.g., verifying whether the industrial process as a whole is known to cause the predicted bad odour in environmental scenario defined by the present sensor data that have originated said prediction and, in this case, stopping the whole industrial process.

Additionally or alternatively, the controlling of the industrial process may include, e.g., verifying whether the industrial process produces a substance which is known to cause the predicted bad odour in environmental scenario defined by the present sensor data that have originated said prediction and, in this case, controlling the industrial process to stop producing said substance without stopping the whole industrial process.

Additionally or alternatively, the controlling of the industrial process may include, e.g., verifying whether the industrial process includes processing a substance which is known to cause the predicted bad odour in environmental scenario defined by the present sensor data that have originated said prediction and, in this case, controlling the industrial process to stop processing said substance without stopping the whole industrial process.

Controlling methods may include, e.g., sending data characterizing the predicted bad odour to a controller of the industrial process and said controller may output control signals to corresponding device(s) to stop the whole process or to stop producing or processing presumably "adverse" substance. Mapping data may be used to determine which control signals to output by the controller to properly control the industrial process. This mapping may implement, e.g., a cause-effect correspondence between environmental scenario patterns and control signals that have been proved to control the industrial process in such a manner that predicted bad odour originated from particular environmental scenario pattern is eliminated or at least attenuated.

In a further aspect, computer programs are provided comprising program instructions for causing a system or computing system to perform any of the predicting methods disclosed herein. Said computer programs (also denominated predicting computer programs herein) may be embodied on a storage medium and/or carried on a carrier signal. Predicting computer programs are suitable for performing predicting methods such as those described in other parts of the disclosure. Hence, aspects of said predicting methods such as, e.g., functional, structural, advantageous considerations may be similarly attributable to predicting computer programs.

In a still further aspect, systems for predicting bad odour in a geographical area are also provided. Such systems (also denominated predicting systems herein) comprise a forming module, a setting module, a building module and a providing module. The forming module is configured to form a training dataset comprising data rows each including example input data and target output data, the example input data including past sensor data generated in the geographical area from environmental sensors during a past time interval, and the target output data including past observation data representing bad odour observations generated in the geographical area during a past time period posterior to the past time interval.

The setting module is configured to configure a computing module computationally implementing a predictor model based on training said predictor model using or depending on the training dataset. The building module is configured to build a production dataset comprising production input data including present sensor data generated in the geographical area from the environmental sensors during a present time interval. The providing module is configured to provide the production dataset to the configured computing module to cause the trained predictor model to output a bad odour prediction.

These predicting systems are suitable for performing predicting methods such as those described in other parts of the disclosure. Hence, aspects of said predicting methods such as, e.g., functional, structural, advantageous considerations may be similarly attributable to predicting systems.

In a yet further aspect, computing systems are provided for predicting bad odour in a geographical area, said computing systems comprising a memory and a processor, embodying instructions stored in the memory and executable by the processor, and the instructions comprising functionality or functionalities to execute predicting methods such as those described in other parts of the disclosure. Such computing systems (also denominated predicting computing systems herein) are suitable or configured to perform predicting methods described herein, so aspects of said predicting methods such as, e.g., functional, structural, advantageous considerations may be similarly attributable to predicting computing systems.

### BRIEF DESCRIPTION OF THE DRAWINGS

Non-limiting examples of present disclosure will be described in the following, with reference to the appended drawings, in which:
Figure 1 is a block diagram schematically illustrating predicting systems according to examples.
Figure 2 is a flow chart schematically illustrating predicting methods according to examples.
Figure 3 is a time chart showing distribution over time of several time windows each including data collection and their provision to pertinent predictor models according to principles described regarding predicting methods such as those of Figure 2.

In these figures, same reference numbers may be used to designate same or similar elements.

### DETAILED DESCRIPTION OF EXAMPLES

Herein, several concepts are referred to through different expressions that may be seen as synonymous expressions. For example, "past time interval", "past time period" and "present time interval" are used to refer to same concept of time elapsed from start time to end time during which data were or have been originated and accordingly collected for its processing in predicting methods according to present disclosure.

The expression "past time interval" refers to time elapsed from start time to end time during which past sensor data were originated or generated in the geographical area from environmental sensors. The expression "past time period" relates to same concept as "past time interval" but, in this case, referring to a time period/interval during which "past" observation data were originated or generated in the geographical area. The term "past" is used to indicate that said past time intervals/periods are historical or not recent time intervals during which "past" sensor and observation data were originated and properly collected for training purposes.

The expression "present time interval" also refers to time elapsed from start time to end time during which present sensor data have been originated or generated in the geographical area from the environmental sensors. The term "present" is used to indicate that said "present" time interval or period is a recent time interval (e.g., several last hours immediately previous to current time) during which "present" sensor data have been originated and properly collected for prediction purposes.

Past time intervals, past time periods and present time intervals may have same time length/span which may be of, e.g., four hours or any other time elapsed between start time and end time delimiting said time length/span.

Denominations such as "time-continuous series of time periods", "time-continuous sequence of time intervals", "continuous-in-time series of time frames" and "continuous-in-time sequence of timespans" are also used to refer to same concept of series or sequences or successions of time periods or time intervals or time frames or timespans during which data were or have been originated and accordingly collected for its processing in predicting methods according to present disclosure. The terms "time-continuous" and "continuous-in-time" are used to indicate that the different time intervals/periods forming the series/sequence are distributed in time in such a manner that the end of one of them substantially coincides or connects with or is adjacent to the start of the next one, without time gaps or with small or negligible time gaps.

Time intervals/periods in time-continuous (or continuous-in-time) series (or sequences) may have same time length/span (e.g., four hours) as past time intervals, past time periods, present time intervals etc.

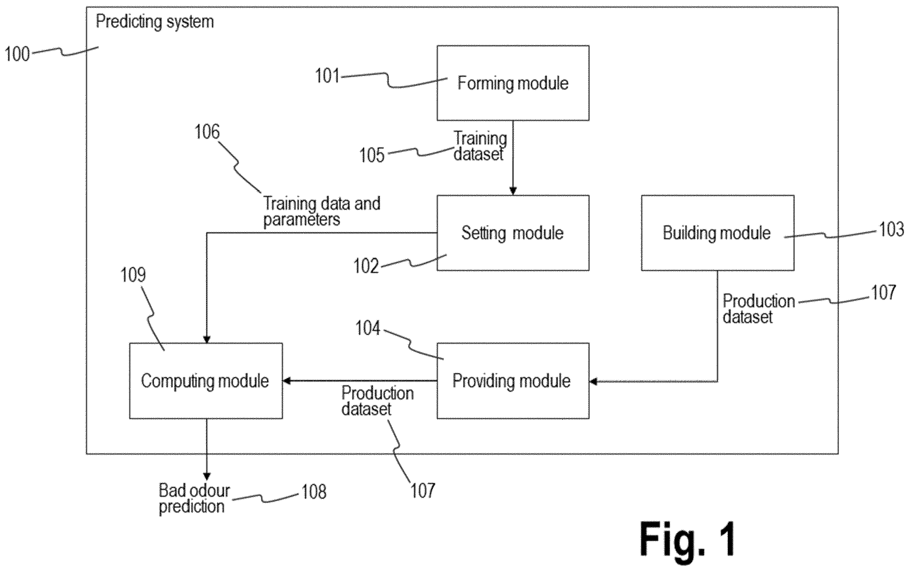

Figure 1 is a block diagram schematically illustrating predicting systems according to examples. As illustrated, predicting systems 100 may comprise a forming module 101, a setting module 102, a building module 103 and a providing module 104.

The forming module 101 may be configured to form a training dataset 105 comprising data rows each including example input data and target output data. The example input data may include past sensor data generated in the geographical area from environmental sensors during a past time interval. The target output data may include past observation data representing bad odour observations generated in the geographical area during a past time period posterior to the past time interval. In each of the data rows, the target output data may correspond to the output expected for its related example input data in the same row. The bad odour observations, or simply observations, may correspond to bad odour citizens' complaints collected by an application aimed at that, bad odour notifications reported by professionals dedicated to that, etc.

The forming module 101 may be specifically configured to operate, in coordination with the other modules 102 - 104, according to any of the functional approaches or combination thereof described in other parts of the disclosure: calendar-referenced approach, location-clustering approach, odour-type-clustering approach, retrospective-observation approach, retrospective-sensing approach, lagged approach, dimensionality-reduction approach.

Sensor data that are included in each of the data rows of the training dataset may represent or comprise one or more of the following types of sensor data: solar radiation sensor data, ultraviolet index sensor data, wind direction sensor data, wind speed sensor data, wind gust sensor data, humidity sensor data, temperature sensor data, thermal sensation sensor data, dew point sensor data, atmospheric pressure sensor data, rain or precipitation sensor data, chemical compound sensor data.

Observation data that are included in each of the data rows of the training dataset may comprise a binary data field representing whether the observation data in the data row indicates one or more observations confirming bad odour. In case of zero observations in the data row confirming bad odour, this data field may be equal to 0 (zero). In case of one or more observations in the data row confirming bad odour, this data field may be equal to 1 (one).

Observation data may additionally or alternatively include bad odour's type, subtype, intensity, hedonic tone, magnitude, etc. Bad odour's type/category may refer to a general classification on the perception of the origin of the bad odour. Bad odour's type/category may have a range of values indicating following possible origins: Industrial, Urban, Agricultural, Waste management, Others.

Bad odour's subtype may refer to a specific classification on the object of the bad odour. Bad odour's subtype may have a range of values indicating following possible objects: Petroleum/Hydrocarbons, Gas/Mercaptans, Gunpowder/Sulphur, Agricultural burning, Sewer, Solvents, Decomposing fish, Garbage, Burnt wood, Feed, Fertilizers/slurries, Unidentified, Gas, Vinegar/acetic acid, Chemical, Bleach/chlorine, Burned, Treatment plant, Gasoline/Combustion of vehicles, Eggs rotten/Hydrogen sulphide, Others.

Bad odour's intensity may refer to a strength or power of the bad odour. Bad odour's intensity may have a range of values indicating following possible strength levels: Very Weak, Weak, Medium, Strong, Very Strong, Extreme. Bad odour's hedonic tone may refer to a degree of unpleasantness of the bad odour, i.e., how unpleasant it is. Bad odour's hedonic tone may have a range of values indicating following possible unpleasantness levels: Extremely unpleasant, Very unpleasant, Unpleasant, Slightly unpleasant, Neutral, Slightly pleasant, Pleasant, Extremely pleasant.

Bad odour's magnitude may refer to how popular an instant was or has been in terms of observations denoting occurrence of bad odour, i.e. quantity of observations at said instant indicating perceived/observed bad odour. Bad odour's magnitude may be a positive integer reflecting such a quantity of observations at same instant.

The setting module 102 may be configured to set or configure a computing module 109 computationally implementing a predictor model (or one or more predictor models) based on training said predictor model(s) using or depending on the training dataset 105 generated at/by the forming module 101. Any known Machine Learning (ML) techniques or combination thereof may be used to perform such a training. The relevant or crucial aspect is how the training dataset is formed and structured rather than the ML approach(es) used to train the predictor model. Which ML technique(s) and how it/they may be implemented is known by skilled people and, therefore, no detailed information on that is provided herein. The setting module 102 may thus provide suitable training data (from the training dataset 105) and training parameters 106 to the computing module 109 to configure it by training the predictor model(s) implemented at/by the computing module 109.

The training of the predictor model(s) is thus performed by providing example input data defining an input scenario which is expected to produce or converge to its related target output data (in same data row) defining corresponding output scenario. In other words, this training may make the predictor model(s) to map or correlate each of the input scenarios to its related output scenario (in same data row). With such a training of the predictor model(s) to cause its/their converge towards such a mapping or correlation, it/they may be induced in production environment to behave following inherent logical rules learned during the training even in the case of input data never "seen" before during the training.

The setting module 102 may be specifically configured to operate, in coordination with the other modules 101, 103, 104, according to any of the functional approaches or combination thereof described in other parts of the disclosure: calendar -referenced approach, location-clustering approach, odour-type-clustering approach, retrospective-observation approach, retrospective-sensing approach, lagged approach, dimensionality-reduction approach.

The building module 103 may be configured to build a production dataset 107 comprising production input data including present sensor data generated in the geographical area from the environmental sensors during a present time interval. This present sensor data originated at/from the environmental sensors during last predefined timespan elapsed (e.g., last four hours) may define a representative scenario of what is occurring in the geographical area from environmental/meteorological perspective.

The building module 103 may be specifically configured to operate, in coordination with the other modules 101, 102, 104, according to any of the functional approaches or combination thereof described in other parts of the disclosure: calendar-referenced approach, location-clustering approach, odour-type-clustering approach, retrospective-observation approach, retrospective-sensing approach, lagged approach, dimensionality-reduction approach. The building of the production dataset 107 may require consistency with the previously performed training of the predictor model(s) according to the functional approach(es) or combination thereof chosen.

The providing module 104 may be configured to provide the production dataset 107 to the configured computing module 109 to cause the trained predictor model to output bad odour prediction(s) which may denote whether bad odour will or will not occur in future time depending on the present sensor data in the production dataset 107. This present sensor data originated at/from the environmental sensors during last predefined timespan elapsed (e.g., last four hours) may define a representative scenario of what is occurring in the geographical area from environmental or meteorological perspective.

The providing module 104 may be specifically configured to operate, in coordination with the other modules 101 - 103, according to any of the functional approaches or combination thereof described in other parts of the disclosure: calendar-referenced approach, location-clustering approach, odour-type-clustering approach, retrospective-observation approach, retrospective-sensing approach, lagged approach, dimensionality-reduction approach.

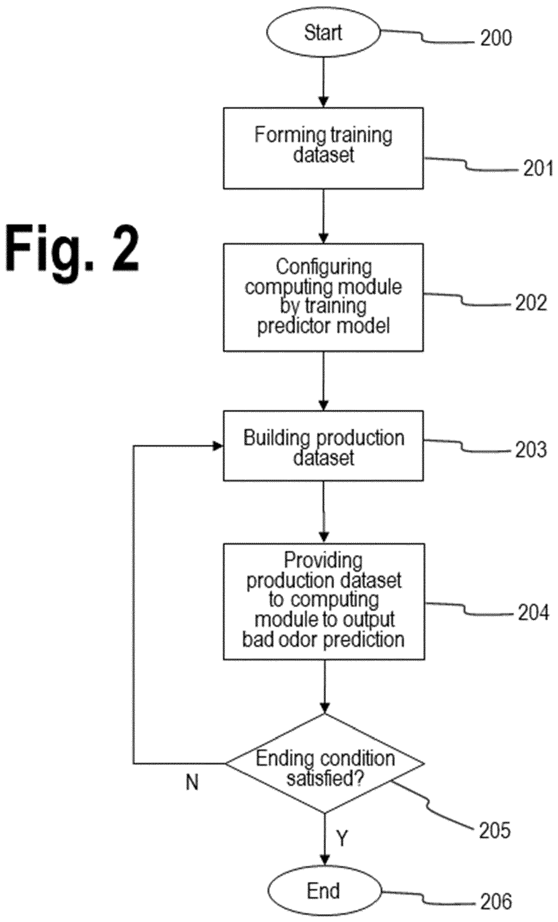

Figure 2 is a flow chart schematically illustrating predicting methods according to examples. Since such predicting methods are performable by predicting systems according to Figure 1, number references from said Figure 1 may be reused in following description of Figure 2. Same or similar functional and operational principles and aspects as those explained with reference to Figure 1 may be attributable to predicting methods according to Figure 2.

Figure 2 illustrates method steps or actions logically connected with arrows denoting execution succession thereof from method/process flow point of view. Such execution successions illustrated in Figure 2 follow particular orders of execution, respectively, but other logical orders of execution are possible whenever satisfaction of pre- and post-conditions of each involved method step/action are respected.

As shown in the drawing, predicting methods may be initiated (e.g., at block 200) upon detection of a starting condition such as, e.g., a user request to start the predicting method.

Predicting methods may further include (e.g., at block 201) forming a training dataset 105 comprising data rows each including example input data and target output data. In each of the data rows, the example input data may include past sensor data generated in the geographical area from environmental sensors during a past time interval, and its related target output data may include past observation data representing bad odour observations generated in the geographical area during a past time period posterior to the past time interval. This forming functionality implementable at, e.g., method-block 201 may be performed by, e.g., forming module 101 previously described with reference to Figure 1. Functional details and considerations explained about said module 101 may thus be similarly attributed to method block 201.

Predicting methods may still further include (e.g., at block 202) configuring a computing module 109 computationally implementing a predictor model based on training said predictor model using or depending on the training dataset 105. This setting functionality implementable at, e.g., method-block 202 may be performed by, e.g., setting module 102 previously described with reference to Figure 1. Functional details and considerations explained about said module 102 may thus be similarly attributed to method block 202.

Predicting methods may yet further include (e.g., at block 203) building a production dataset 107 comprising production input data including present sensor data generated in the geographical area from the environmental sensors during a present time interval. This building functionality implementable at, e.g., method-block 203 may be performed by, e.g., building module 103 previously described with reference to Figure 1. Functional details and considerations explained about said module 103 may thus be similarly attributed to method block 203.

Predicting methods may furthermore include (e.g., at block 204) providing the production dataset 107 to the configured computing module 109 to cause the trained predictor model to output bad odour prediction 108. This providing functionality implementable at, e.g., method-block 204 may be performed by, e.g., providing module 104 previously described with reference to Figure 1. Functional details and considerations explained about said module 104 may thus be similarly attributed to method block 204.

Predicting methods may still furthermore include (e.g., at block 205) verifying whether an ending condition occurs or is satisfied. In case of positive or true result (Y) of said verification, predicting method may proceed to method-block 206 to terminate execution of the predicting method. Otherwise (N), predicting method may loop back to previous method-block 203 to perform a new iteration to build another production dataset (block 203) and produce a new prediction therefrom (block 204). Ending condition may be or may include, e.g., a user request of terminating the predicting method.

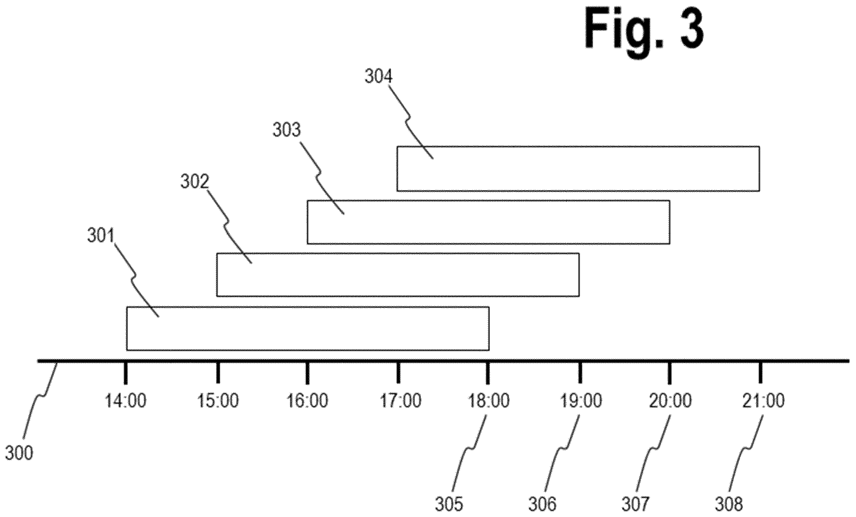

The above logics of terminating the predicting method under detection of an ending condition may be suitable if punctual prediction or group of predictions is desired. In other implementations, it may be required obtaining bad odour prediction(s) periodically (e.g., every hour or several hours) with unexpected termination time or condition. Examples of this last particular situation are described below with reference to Figure 3.

Figure 3 is a time chart showing distribution over time of several time windows 301 - 304 during each of which current/recent data generated in the geographical area are collected and finally provided to corresponding predictor model to output bad odour prediction depending on said data provided. Each of the predictor models assigned to each of the time windows 301 - 304 may be fed with data and may operate according to principles described regarding predicting systems and methods such as those according to Figures 1 and 2.

Since operation of the several predictor models in time windows 301 - 304 may be based on aspects such as, e.g., functional, structural, advantageous considerations described with respect to predicting systems according to Figure 1 and predicting methods according to Figure 2, number references from said Figures 1 and 2 may be reused in this description of Figure 3.

Predicting methods may be seen as having two main stages: a first stage of configuring the computing module/system by training one or more predictor models implemented at/by said computing module/system based on past/historical data, and a second stage of predicting occurrence or non-occurrence of bad odour by providing current/recent data to the trained predictor model(s). The scenario to which Figure 3 refers corresponds to particular examples of said second stage, once involved predictor models have been previously trained in corresponding first stage.

Time baseline 300 is used to represent time dimension in relation to which time windows 301 - 304 are depicted to reflect when each of them occurs over time. Only one instance of each time window 301 - 304 is shown in the drawing: instance of window 301 from 14:00 to 18:00, instance of window 302 from 15:00 to 19:00, instance of window 303 from 16:00 to 20:00 and instance of window 304 from 17:00 to 21:00. However, each time window 301 - 304 may occur/operate over time in recurrent manner, i.e., each time current instance of window 301 finishes, new instance of window 301 may be started and so on, and the same principle may apply to the other time windows 302 - 304.

Time windows 301 - 304 may be scheduled to occur over time with a predefined time lag/offset between them. In the particular example depicted, this predefined time lag/offset has a time length of one hour. This manner, new bad odour prediction may be obtained every time said time length elapses, i.e., every hour elapsed in the particular example illustrated. As particularly shown, time window 301 ends at 18:00 outputting pertinent prediction 305, time window 302 ends at 19:00 outputting pertinent prediction 306, time window 303 ends at 20:00 outputting pertinent prediction 307 and time window 304 ends at 21:00 outputting pertinent prediction 308, and so on in recurrent manner over time.

As commented in other parts of the disclosure, methods and systems for controlling an industrial process may also be provided. Such controlling systems may include a predicting system such as any of the ones described with reference to Figure 1, said predicting system being configured to perform a predicting method such as any of the ones described with reference to Figure 2 (to obtain punctual predictions) or with reference to Figure 3 (to obtain predictions recurrently every predefined time length such as, e.g., every hour or several hours).

A control system dedicated to control the industrial process may include the predicting system which may output bad odour predictions regularly over time. Each of said predictions may be processed by, e.g., a controller of the industrial process included in the control system. The controller may assess each of the predictions from the predicting system and output control signals to device(s) intervening in the industrial process in order to adjust its operation to avoid or at least attenuate the predicted bad odour.

The controller may receive present/recent sensor/observation data defining the environmental scenario under which the predicting system inferred that bad odour will probably occur. Then, said received sensor and observation data and, optionally, the bad odour prediction(s) may be inputted by the controller into a mapping unit defining a cause-effect mapping between environmental scenario patterns and control signals to device(s) intervening in the industrial process which have been experimentally proven to regulate the industrial process in such a manner that the predicted bad odour is avoided or reasonably attenuated.

The mapping unit may determine, e.g., that the predicted bad odour in the ascertained environmental scenario may be avoided or properly attenuated by unavoidably stopping the whole industrial process, or by stopping producing a particular substance without necessarily stopping the whole process, or by stopping processing of specific substance without necessarily stopping the whole process, etc. This determination by the mapping unit may trigger producing control signals to devices intervening in the process to make the whole process stop, or to make production of adverse substance stop, or to make processing of unfavourable substance stop, etc. Many other control actuations on the industrial process via control signals are possible to adjust it and thereby remedy the predicted bad odour. Such possible control actuations may include, e.g., slowing down the process or stage(s) of the process, altering pressure conditions, altering temperature conditions, changing humidity conditions, modifying air flow conditions, modulating friction conditions, adjusting electrical conditions, etc.

As used herein, the term "module" may be understood to refer to software, firmware, hardware and/or various combinations thereof. It is noted that the modules are exemplary. The modules may be combined, integrated, separated, and/or duplicated to support various applications. Also, a function described herein as being performed by a particular module may be performed by one or more other modules and/or by one or more other devices instead of or in addition to the function performed by the described particular module.

The modules may be implemented across multiple devices, associated or linked to corresponding predicting methods/systems proposed herein, and/or to other components that may be local or remote to one another. Additionally, the modules may be moved from one device and added to another device, and/or may be included in both devices, associated to corresponding predicting methods/systems proposed herein. Any software implementations may be tangibly embodied in one or more storage media such as, e.g., a memory device, a floppy disk, a compact disk (CD), a digital versatile disk (DVD), or other devices that may store computer code.

The predicting systems according to present disclosure may be implemented by computing means, electronic means or a combination thereof. The computing means may be a set of instructions (e.g., a computer program) and then the predicting systems may comprise a memory and a processor, embodying said set of instructions stored in the memory and executable by the processor. These instructions may comprise functionality or functionalities to execute corresponding predicting methods such as e.g. the ones described in other parts of the disclosure.

In case the predicting systems are implemented only by electronic means, a controller of the system may be, for example, a CPLD (Complex Programmable Logic Device), an FPGA (Field Programmable Gate Array) or an ASIC (Application-Specific Integrated Circuit).

In case the predicting systems are a combination of electronic and computing means, the computing means may be a set of instructions (e.g., a computer program) and the electronic means may be any electronic circuit capable of implementing corresponding method-steps of the predicting methods proposed herein, such as those described in other parts of the disclosure.

The computer program(s) may be embodied on a storage medium (for example, a CD-ROM, a DVD, a USB drive, a computer memory or a read-only memory) or carried on a carrier signal (for example, on an electrical or optical carrier signal).

The computer program(s) may be in the form of source code, object code, a code intermediate source and object code such as in partially compiled form, or in any other form suitable for use in implementing predicting methods according to present disclosure. The carrier may be any entity or device capable of carrying the computer program(s).

For example, the carrier may comprise a storage medium, such as a ROM, for example a CD ROM or a semiconductor ROM, or a magnetic recording medium, for example a hard disk. Further, the carrier may be a transmissible carrier such as an electrical or optical signal, which may be conveyed via electrical or optical cable or by radio or other means.

When the computer program(s) is/are embodied in a signal that may be conveyed directly by a cable or other device or means, the carrier may be constituted by such cable or other device or means. Alternatively, the carrier may be an integrated circuit in which the computer program(s) is/are embedded, the integrated circuit being adapted for performing, or for use in the performance of, predicting methods proposed herein.

Although only a number of examples have been disclosed herein, other alternatives, modifications, uses and/or equivalents thereof are possible. Furthermore, all possible combinations of the described examples are also covered. Thus, the scope of present disclosure should not be limited by particular examples but it should be determined only by a fair reading of the claims that follow.

## Claims

1. A computer implemented method of predicting bad odour in a geographical area, the method comprising:
forming a training dataset comprising data rows each including example input data and target output data, the example input data including past sensor data generated in the geographical area from environmental or meteorological sensors during a past time interval, and the target output data including past observation data representing bad odour observations, denoting at least whether bad odour was perceived or not perceived by humans, generated in the geographical area during a past time period posterior to the past time interval;
configuring a computing module computationally implementing a predictor model based on training said predictor model using or depending on the training dataset;
building a production dataset comprising production input data including present sensor data generated in the geographical area from the environmental or meteorological sensors during a present time interval;
providing the production dataset to the configured computing module to cause the trained predictor model to output a bad odour prediction.

2. Method of predicting bad odour according to claim 1, wherein the environmental or meteorological sensors include one or more of following sensor types: solar radiation sensor, ultraviolet index sensor, wind direction sensor, wind speed sensor, wind gust sensor, humidity sensor, temperature sensor, thermal sensation sensor, dew point sensor, atmospheric pressure sensor, rain or precipitation sensor, chemical compound sensors.

3. Method of predicting bad odour according to any of claims 1 or 2, wherein the forming of the training dataset further comprises for each of the data rows:
obtaining historical observation data representing bad odour observations, denoting at least whether bad odour was perceived or not perceived by humans, generated in the geographical area either prior to the past time period or during and prior to the past time period during which the past observation data in the data row were generated,
performing mathematical transformations on the historical observation data to obtain autocorrelated past observation data defining retrospective behaviour patterns of the past observation data in the data row, and
including the autocorrelated past observation data in the example input data of the data row in such a manner that the predictor model is trained further depending on said autocorrelated past observation data; and wherein
the building of the production dataset further comprises:
obtaining preterit observation data representing bad odour observations, denoting at least whether bad odour was perceived or not perceived by humans, generated in the geographical area during and prior to the present time interval,
performing the mathematical transformations on the preterit observation data to obtain autocorrelated preterit observation data defining retrospective behaviour patterns of the preterit observation data, and
including the autocorrelated preterit observation data in the production input data to cause the trained predictor model to output the bad odour prediction further depending on said autocorrelated preterit observation data.

4. Method of predicting bad odour according to claim 3, wherein the historical observation data obtained for each of the data rows include observations each of which was generated during a time period in a time-continuous series of time periods having a most recent time period, the time-continuous series including the past time period as the most recent time period and successive time periods prior to the past time period or, alternatively, only the successive time periods prior to the past time period, in which case the most recent time period is the successive time period immediately preceding in time the past time period; and
the performing of the mathematical transformations on the historical observation data comprises, for each of the data rows, one or more of:
calculating an accumulated sum of observations denoting occurrence of bad odour that were generated within the time-continuous series or a time-continuous part thereof from its most recent time period backwards in time until a final time period in the time-continuous series,
calculating a sliding average of observations denoting occurrence of bad odour that were generated within a predefined time range in the time-continuous series from its most recent time period backwards in time,
determining a number of contiguous time periods in the time-continuous series from its most recent time period backwards in time until a final time period, wherein the observations generated within each of said contiguous time periods denote occurrence of bad odour and the observations generated within said final time period denote non-occurrence of bad odour,
determining a time length spanning contiguous time periods in the time-continuous series from its most recent time period backwards in time until a final time period, wherein the observations generated within each of said contiguous time periods denote non-occurrence of bad odour and the observations generated within said final time period denote occurrence of bad odour; and wherein
the preterit observation data include observations each of which was generated during a time interval in a time-continuous sequence of time intervals having a most recent time interval, the time-continuous sequence including the present time interval as the most recent time interval and successive time intervals prior to the present time interval; and
the performing of the mathematical transformations on the preterit observation data comprises, for each of the data rows, one or more of:
calculating an accumulated sum of observations denoting occurrence of bad odour that were generated within the time-continuous sequence or a time-continuous part thereof from its most recent time interval backwards in time until a final time interval in the time-continuous sequence,
calculating a sliding average of observations denoting occurrence of bad odour that were generated within a predefined time range in the time-continuous sequence from its most recent time interval backwards in time,
determining a number of contiguous time intervals in the time-continuous sequence from its most recent time interval backwards in time until a final time interval, wherein the observations generated within each of said contiguous time intervals denote occurrence of bad odour and the observations generated within said final time interval denote non-occurrence of bad odour,
determining a time length spanning contiguous time intervals in the time-continuous sequence from its most recent time interval backwards in time until a final time interval, wherein the observations generated within each of said contiguous time intervals denote non-occurrence of bad odour and the observations generated within said final time interval denote occurrence of bad odour.

5. Method of predicting bad odour according to any of claims 1 to 4, wherein the forming of the training dataset further comprises for each of the data rows:
obtaining historical sensor data generated in the geographical area from the environmental or meteorological sensors either prior to the past time interval or during and prior to the past time interval during which the past sensor data in the data row were generated,
performing mathematical conversions on the historical sensor data to obtain autocorrelated past sensor data defining retrospective behaviour patterns of the past sensor data in the data row, and
including the autocorrelated past sensor data in the example input data of the data row in such a manner that the predictor model is trained further depending on said autocorrelated past sensor data; and wherein
the building of the production dataset further comprises:
obtaining preterit sensor data generated in the geographical area from the environmental or meteorological sensors either prior to the present time interval or during and prior to the present time interval,
performing the mathematical conversions on the preterit sensor data to obtain autocorrelated preterit sensor data defining retrospective behaviour patterns of the preterit sensor data, and
including the autocorrelated preterit sensor data in the production input data to cause the trained predictor model to output the bad odour prediction further depending on said autocorrelated preterit sensor data.

6. Method of predicting bad odour according to claim 5, wherein the historical sensor data obtained for each of the data rows include sensor measurements each of which was generated during a time frame in a continuous-in-time series of time frames having a most recent time frame, the continuous-in-time series including the past time interval as the most recent time frame and successive time frames prior to the past time interval or, alternatively, only the successive time frames prior to the past time interval, in which case the most recent time frame is the successive time frame immediately preceding in time the past time interval; and
the performing of the mathematical conversions on the historical sensor data comprises, for each of the data rows, one or more of:
calculating, for each sensor measurement type, an average value and/or a standard deviation and/or a logarithm value of the sensor measurements of said type that were generated within the continuous-in-time series or a time-continuous part thereof from its most recent time frame backwards in time until a final time frame in the continuous-in-time series,
determining, for each sensor measurement type, a maximum value and/or a minimum value of the sensor measurements of said type that were generated within the continuous-in-time series or a time-continuous part thereof from its most recent time frame backwards in time until a final time frame in the continuous-in-time series; and wherein
the preterit sensor data include sensor measuring values each of which was generated during a timespan in a continuous-in-time sequence of timespans having a most recent timespan, the continuous-in-time sequence including the present time interval as the most recent timespan and successive timespans prior to the present time interval or, alternatively, only the successive timespans prior to the present time interval, in which case the most recent timespan is the successive timespan immediately preceding in time the present time interval; and
the performing of the mathematical conversions on the preterit sensor data comprises, for each of the data rows, one or more of:
calculating, for each sensor measuring type, an average value and/or a standard deviation and/or a logarithm value of the sensor measuring values of said type that were generated within the continuous-in-time sequence or a time-continuous part thereof from its most recent timespan backwards in time until a final timespan in the continuous-in-time sequence,
determining, for each sensor measuring type, a maximum value and/or a minimum value of the sensor measuring values of said type that were generated within the continuous-in-time sequence or a time-continuous part thereof from its most recent timespan backwards in time until a final timespan in the continuous-in-time sequence.

7. Method of predicting bad odour according to any of claims 1 to 6, wherein each of the data rows in the training dataset refers to a past time interval during which the past sensor data in the data row were generated, and the past time intervals to which all the data rows refer conform a time-continuous series of past time intervals; wherein
the forming of the training dataset further comprises, for each of the data rows, including in the example input data of the data row the past sensor data of a quantity of contiguous data rows immediately preceding the data row, said quantity of contiguous data rows being a number between 0 and 8 of contiguous data rows; wherein
the production dataset refers to a present time interval during which the present sensor data in the production dataset have been generated, said present time interval being part of a time-continuous series of present time intervals during each of which corresponding present sensor data have been generated; and wherein
the building of the production dataset further comprises including in the production input data of the production dataset the present sensor data that have been generated during a quantity of contiguous present time intervals immediately preceding the present time interval to which the production dataset refers, said quantity of contiguous present time intervals being a number between 0 and 8 of contiguous present time intervals.

8. Method of predicting bad odour according to any of claims 1 to 7, wherein the forming of the training dataset further comprises for each of the data rows:
including in the example input data of the data row a date-time reference representing the past time interval during which the past sensor data in the data row were generated, in such a manner that the predictor model is trained further depending on said date-time reference; and wherein
the building of the production dataset further comprises:
including in the production input data a date-time referral representing the present time interval during which the present sensor data in the production input data have been generated to cause the trained predictor model to output the bad odour prediction further depending on said date-time referral.

9. Method of predicting bad odour according to any of claims 1 to 8, wherein
the past sensor data in each of the data rows comprise or represent past sensing measurements each including a location of where it was generated, and the present sensor data in the production input data comprise or represent present sensing measurements each including a location of where it has been generated; and wherein
the forming of the training dataset further includes clustering the past sensing measurements by their location to territorialize the past sensor data into different predefined regions within the geographical area, and
the building of the production dataset further includes clustering the present sensing measurements by their location to territorialize the present sensor data into different predefined regions within the geographical area.

10. Method of predicting bad odour according to any of claims 1 to 9, wherein each of the bad odour observations generated in the geographical area includes a location of where it was generated; and wherein
the method further comprises clustering said bad odour observations by their location to territorialize them into different predefined regions within the geographical area.

11. Method of predicting bad odour according to claim 9 or 10, wherein each of the predefined regions within the geographical area includes an industrial installation performing or implementing an industrial process which is known to potentially cause bad odour or worsening thereof.

12. Method of predicting bad odour according to any of claims 1 to 11, further comprising
performing a dimensionality reduction on the past sensor data to compress them while retaining meaningful properties thereof; and
performing a dimensionality reduction on the present sensor data to compress them while retaining meaningful properties thereof.

13. Method of controlling an industrial process performed by/at an industrial installation in a geographical area, the method comprising:
performing a method of predicting bad odour according to any of claims 1 to 12 to obtain a bad odour prediction in the geographical area; and
verifying whether the obtained bad odour prediction denotes future occurrence of bad odour and, in said case:
verifying whether the industrial process as a whole is known to cause bad odour in an environmental or meteorological scenario defined by the present sensor data and, in said case, stopping the industrial process, or
verifying whether the industrial process produces a substance which is known to cause bad odour in an environmental or meteorological scenario defined by the present sensor data and, in said case, controlling the industrial process to stop producing said substance without stopping the industrial process; or
verifying whether the industrial process includes processing a substance which is known to cause bad odour in an environmental or meteorological scenario defined by the present sensor data and, in said case, controlling the industrial process to stop processing said substance without stopping the industrial process.

14. Computer program comprising program instructions for causing a system or computing system to perform a method according to any of claims 1 to 13.

15. System for predicting bad odour in a geographical area, the system comprising:
a forming module configured to form a training dataset comprising data rows each including example input data and target output data, the example input data including past sensor data generated in the geographical area from environmental or meteorological sensors during a past time interval, and the target output data including past observation data representing bad odour observations, denoting at least whether bad odour was perceived or not perceived by humans, generated in the geographical area during a past time period posterior to the past time interval;
a setting module configured to configure a computing module computationally implementing a predictor model based on training said predictor model using or depending on the training dataset;
a building module configured to build a production dataset comprising production input data including present sensor data generated in the geographical area from the environmental or meteorological sensors during a present time interval;
a providing module configured to provide the production dataset to the configured computing module to cause the trained predictor model to output a bad odour prediction.

## Patentansprüche

1. Computerimplementiertes Verfahren zum Vorhersagen von schlechtem Geruch in einem geografischen Gebiet, wobei das Verfahren umfasst:
Bilden eines Trainingsdatensatzes, der Datenzeilen umfasst, die jeweils Beispieleingabedaten und Zielausgabedaten enthalten, wobei die Beispieleingabedaten vergangene Sensordaten enthalten, die in dem geografischen Gebiet von Umwelt- oder meteorologischen Sensoren während eines vergangenen Zeitintervalls erzeugt wurden, und die Zielausgabedaten vergangene Beobachtungsdaten enthalten, die Beobachtungen schlechten Geruchs darstellen und zumindest angeben, ob schlechter Geruch von Menschen wahrgenommen oder nicht wahrgenommen wurde, die in dem geografischen Gebiet während eines vergangenen Zeitraums erzeugt wurden, der nach dem vergangenen Zeitintervall liegt;
Konfigurieren eines Rechenmoduls, das rechnerisch ein Prädiktormodell implementiert, auf Grundlage eines Trainierens des Prädiktormodells unter Verwendung des Trainingsdatensatzes oder in Abhängigkeit von diesem;
Erstellen eines Produktionsdatensatzes, der Produktionseingabedaten umfasst, die aktuelle Sensordaten enthalten, die in dem geografischen Gebiet von den Umwelt- oder meteorologischen Sensoren während eines aktuellen Zeitintervalls erzeugt wurden;
Bereitstellen des Produktionsdatensatzes an das konfigurierte Rechenmodul, um zu bewirken, dass das trainierte Prädiktormodell eine Vorhersage schlechten Geruchs ausgibt.

2. Verfahren zum Vorhersagen von schlechtem Geruch nach Anspruch 1, wobei die Umwelt- oder meteorologischen Sensoren einen oder mehrere der folgenden Sensortypen umfassen: Sonnenstrahlungssensor, Ultraviolettindexsensor, Windrichtungssensor, Windgeschwindigkeitssensor, Windböensensor, Feuchtigkeitssensor, Temperatursensor, Sensor für thermische Empfindung, Taupunktsensor, Atmosphärendrucksensor, Regen- oder Niederschlagssensor, Sensoren für chemische Verbindungen.

3. Verfahren zum Vorhersagen von schlechtem Geruch nach Anspruch 1 oder 2, wobei das Bilden des Trainingsdatensatzes für jede der Datenzeilen ferner umfasst:
Erhalten historischer Beobachtungsdaten, die Beobachtungen schlechten Geruchs darstellen und zumindest angeben, ob schlechter Geruch von Menschen wahrgenommen oder nicht wahrgenommen wurde, die in dem geografischen Gebiet entweder vor dem vergangenen Zeitraum oder während und vor dem vergangenen Zeitraum erzeugt wurden, während dessen die vergangenen Beobachtungsdaten in der Datenzeile erzeugt wurden;
Durchführen mathematischer Transformationen an den historischen Beobachtungsdaten, um autokorrelierte vergangene Beobachtungsdaten zu erhalten, die retrospektive Verhaltensmuster der vergangenen Beobachtungsdaten in der Datenzeile definieren, und Einbeziehen der autokorrelierten vergangenen Beobachtungsdaten in die Beispieleingabedaten der Datenzeile in einer solchen Weise, dass das Prädiktormodell ferner in Abhängigkeit von den genannten autokorrelierten vergangenen Beobachtungsdaten trainiert wird; und wobei
das Erstellen des Produktionsdatensatzes ferner umfasst:
Erhalten früherer Beobachtungsdaten, die Beobachtungen schlechten Geruchs darstellen und zumindest angeben, ob schlechter Geruch von Menschen wahrgenommen oder nicht wahrgenommen wurde, die in dem geografischen Gebiet während und vor dem aktuellen Zeitintervall erzeugt wurden,
Durchführen der mathematischen Transformationen an den früheren Beobachtungsdaten, um autokorrelierte frühere Beobachtungsdaten zu erhalten, die retrospektive Verhaltensmuster der früheren Beobachtungsdaten definieren, und
Einbeziehen der autokorrelierten früheren Beobachtungsdaten in die Produktionseingabedaten, um zu bewirken, dass das trainierte Prädiktormodell die Vorhersage schlechten Geruchs ferner in Abhängigkeit von den genannten autokorrelierten früheren Beobachtungsdaten ausgibt.

4. Verfahren zum Vorhersagen von schlechtem Geruch nach Anspruch 3, wobei die für jede der Datenzeilen erhaltenen historischen Beobachtungsdaten Beobachtungen umfassen, von denen jede während einer Zeitperiode in einer zeitkontinuierlichen Reihe von Zeitperioden erzeugt wurde, die eine jüngste Zeitperiode aufweist, wobei die zeitkontinuierliche Reihe die vergangene Zeitperiode als die jüngste Zeitperiode und aufeinanderfolgende Zeitperioden vor der vergangenen Zeitperiode umfasst oder alternativ lediglich die aufeinanderfolgenden Zeitperioden vor der vergangenen Zeitperiode, wobei in diesem Fall die jüngste Zeitperiode die aufeinanderfolgende Zeitperiode ist, die der vergangenen Zeitperiode zeitlich unmittelbar vorausgeht; und
das Durchführen der mathematischen Transformationen an den historischen Beobachtungsdaten für jede der Datenzeilen eines oder mehrere der Folgenden umfasst:
Berechnen einer akkumulierten Summe von Beobachtungen, die das Auftreten von schlechtem Geruch angeben und innerhalb der zeitkontinuierlichen Reihe oder eines zeitkontinuierlichen Teils davon von deren jüngster Zeitperiode zeitlich rückwärts bis zu einer finalen Zeitperiode in der zeitkontinuierlichen Reihe erzeugt wurden,
Berechnen eines gleitenden Mittelwerts von Beobachtungen, die das Auftreten von schlechtem Geruch angeben und innerhalb eines vordefinierten Zeitbereichs in der zeitkontinuierlichen Reihe von deren jüngster Zeitperiode zeitlich rückwärts erzeugt wurden,
Bestimmen einer Anzahl zusammenhängender Zeitperioden in der zeitkontinuierlichen Reihe von deren jüngster Zeitperiode zeitlich rückwärts bis zu einer finalen Zeitperiode, wobei die innerhalb jeder der genannten zusammenhängenden Zeitperioden erzeugten Beobachtungen das Auftreten von schlechtem Geruch angeben und die innerhalb der genannten finalen Zeitperiode erzeugten Beobachtungen das Nichtauftreten von schlechtem Geruch angeben,
Bestimmen einer Zeitdauer, die zusammenhängende Zeitperioden in der zeitkontinuierlichen Reihe von deren jüngster Zeitperiode zeitlich rückwärts bis zu einer finalen Zeitperiode überspannt, wobei die innerhalb jeder der genannten zusammenhängenden Zeitperioden erzeugten Beobachtungen das Nichtauftreten von schlechtem Geruch angeben und die innerhalb der genannten finalen Zeitperiode erzeugten Beobachtungen das Auftreten von schlechtem Geruch angeben; und wobei
die früheren Beobachtungsdaten Beobachtungen umfassen, von denen jede während eines Zeitintervalls in einer zeitkontinuierlichen Folge von Zeitintervallen erzeugt wurde, die ein jüngstes Zeitintervall aufweist, wobei die zeitkontinuierliche Folge das aktuelle Zeitintervall als das jüngste Zeitintervall und aufeinanderfolgende Zeitintervalle vor dem aktuellen Zeitintervall umfasst; und
das Durchführen der mathematischen Transformationen an den früheren Beobachtungsdaten für jede der Datenzeilen eines oder mehrere der Folgenden umfasst:
Berechnen einer akkumulierten Summe von Beobachtungen, die das Auftreten von schlechtem Geruch angeben und innerhalb der zeitkontinuierlichen Folge oder eines zeitkontinuierlichen Teils davon von deren jüngstem Zeitintervall zeitlich rückwärts bis zu einem finalen Zeitintervall in der zeitkontinuierlichen Folge erzeugt wurden,
Berechnen eines gleitenden Mittelwerts von Beobachtungen, die das Auftreten von schlechtem Geruch angeben und innerhalb eines vordefinierten Zeitbereichs in der zeitkontinuierlichen Folge von deren jüngstem Zeitintervall zeitlich rückwärts erzeugt wurden,
Bestimmen einer Anzahl zusammenhängender Zeitintervalle in der zeitkontinuierlichen Folge von deren jüngstem Zeitintervall zeitlich rückwärts bis zu einem finalen Zeitintervall, wobei die innerhalb jedes der genannten zusammenhängenden Zeitintervalle erzeugten Beobachtungen das Auftreten von schlechtem Geruch angeben und die innerhalb des genannten finalen Zeitintervalls erzeugten Beobachtungen das Nichtauftreten von schlechtem Geruch angeben,
Bestimmen einer Zeitdauer, die zusammenhängende Zeitintervalle in der zeitkontinuierlichen Folge von deren jüngstem Zeitintervall zeitlich rückwärts bis zu einem finalen Zeitintervall überspannt, wobei die innerhalb jedes der genannten zusammenhängenden Zeitintervalle erzeugten Beobachtungen das Nichtauftreten von schlechtem Geruch angeben und die innerhalb des genannten finalen Zeitintervalls erzeugten Beobachtungen das Auftreten von schlechtem Geruch angeben.

5. Verfahren zum Vorhersagen von schlechtem Geruch nach einem der Ansprüche 1 bis 4, wobei das Bilden des Trainingsdatensatzes für jede der Datenzeilen ferner umfasst:
Erhalten historischer Sensordaten, die in dem geografischen Gebiet von den Umwelt-oder meteorologischen Sensoren entweder vor dem vergangenen Zeitintervall oder während und vor dem vergangenen Zeitintervall erzeugt wurden, während dessen die vergangenen Sensordaten in der Datenzeile erzeugt wurden,
Durchführen mathematischer Umwandlungen an den historischen Sensordaten, um autokorrelierte vergangene Sensordaten zu erhalten, die retrospektive Verhaltensmuster der vergangenen Sensordaten in der Datenzeile definieren, und
Einbeziehen der autokorrelierten vergangenen Sensordaten in die Beispieleingabedaten der Datenzeile in einer solchen Weise, dass das Prädiktormodell ferner in Abhängigkeit von den genannten autokorrelierten vergangenen Sensordaten trainiert wird; und wobei
das Erstellen des Produktionsdatensatzes ferner umfasst:
Erhalten früherer Sensordaten, die in dem geografischen Gebiet von den Umwelt- oder meteorologischen Sensoren entweder vor dem aktuellen Zeitintervall oder während und vor dem aktuellen Zeitintervall erzeugt wurden,
Durchführen der mathematischen Umwandlungen an den früheren Sensordaten, um autokorrelierte frühere Sensordaten zu erhalten, die retrospektive Verhaltensmuster der früheren Sensordaten definieren, und
Einbeziehen der autokorrelierten früheren Sensordaten in die Produktionseingabedaten, um zu bewirken, dass das trainierte Prädiktormodell die Vorhersage schlechten Geruchs ferner in Abhängigkeit von den genannten autokorrelierten früheren Sensordaten ausgibt.

6. Verfahren zum Vorhersagen von schlechtem Geruch nach Anspruch 5, wobei die für jede der Datenzeilen erhaltenen historischen Sensordaten Sensormessungen umfassen, von denen jede während eines Zeitrahmens in einer zeitkontinuierlichen Reihe von Zeitrahmen erzeugt wurde, die einen jüngsten Zeitrahmen aufweist, wobei die zeitkontinuierliche Reihe das vergangene Zeitintervall als den jüngsten Zeitrahmen und aufeinanderfolgende Zeitrahmen vor dem vergangenen Zeitintervall oder alternativ lediglich die aufeinanderfolgenden Zeitrahmen vor dem vergangenen Zeitintervall umfasst, wobei in diesem Fall der jüngste Zeitrahmen der aufeinanderfolgende Zeitrahmen ist, der dem vergangenen Zeitintervall zeitlich unmittelbar vorausgeht; und
das Durchführen der mathematischen Umwandlungen an den historischen Sensordaten für jede der Datenzeilen eines oder mehrere der Folgenden umfasst:
Berechnen, für jeden Sensormessungstyp, eines Durchschnittswerts und/oder einer Standardabweichung und/oder eines Logarithmuswerts der Sensormessungen des genannten Typs, die innerhalb der zeitkontinuierlichen Reihe oder eines zeitkontinuierlichen Teils davon von deren jüngstem Zeitrahmen zeitlich rückwärts bis zu einem finalen Zeitrahmen in der zeitkontinuierlichen Reihe erzeugt wurden,
Bestimmen, für jeden Sensormessungstyp, eines Maximalwerts und/oder eines Minimalwerts der Sensormessungen des genannten Typs, die innerhalb der zeitkontinuierlichen Reihe oder eines zeitkontinuierlichen Teils davon von deren jüngstem Zeitrahmen zeitlich rückwärts bis zu einem finalen Zeitrahmen in der zeitkontinuierlichen Reihe erzeugt wurden; und wobei
die früheren Sensordaten Sensormesswerte umfassen, von denen jeder während einer Zeitspanne in einer zeitkontinuierlichen Folge von Zeitspannen erzeugt wurde, die eine jüngste Zeitspanne aufweist, wobei die zeitkontinuierliche Folge das aktuelle Zeitintervall als die jüngste Zeitspanne und aufeinanderfolgende Zeitspannen vor dem aktuellen Zeitintervall oder alternativ lediglich die aufeinanderfolgenden Zeitspannen vor dem aktuellen Zeitintervall umfasst, wobei in diesem Fall die jüngste Zeitspanne die aufeinanderfolgende Zeitspanne ist, die dem aktuellen Zeitintervall zeitlich unmittelbar vorausgeht; und
das Durchführen der mathematischen Umwandlungen an den früheren Sensordaten für jede der Datenzeilen eines oder mehrere der Folgenden umfasst:
Berechnen, für jeden Sensormessungstyp, eines Durchschnittswerts und/oder einer Standardabweichung und/oder eines Logarithmuswerts der Sensormesswerte des genannten Typs, die innerhalb der zeitkontinuierlichen Folge oder eines zeitkontinuierlichen Teils davon von deren jüngster Zeitspanne zeitlich rückwärts bis zu einer finalen Zeitspanne in der zeitkontinuierlichen Folge erzeugt wurden,
Bestimmen, für jeden Sensormessungstyp, eines Maximalwerts und/oder eines Minimalwerts der Sensormesswerte des genannten Typs, die innerhalb der zeitkontinuierlichen Folge oder eines zeitkontinuierlichen Teils davon von deren jüngster Zeitspanne zeitlich rückwärts bis zu einer finalen Zeitspanne in der zeitkontinuierlichen Folge erzeugt wurden.

7. Verfahren zum Vorhersagen von schlechtem Geruch nach einem der Ansprüche 1 bis 6, wobei sich jede der Datenzeilen in dem Trainingsdatensatz auf ein vergangenes Zeitintervall bezieht, während dessen die vergangenen Sensordaten in der Datenzeile erzeugt wurden, und die vergangenen Zeitintervalle, auf die sich sämtliche Datenzeilen beziehen, eine zeitkontinuierliche Reihe vergangener Zeitintervalle bilden; wobei
das Bilden des Trainingsdatensatzes für jede der Datenzeilen ferner umfasst, Einbeziehen, in die Beispieleingabedaten der Datenzeile, der vergangenen Sensordaten einer Menge zusammenhängender Datenzeilen, die der Datenzeile unmittelbar vorausgehen, wobei die genannte Menge zusammenhängender Datenzeilen eine Anzahl zwischen 0 und 8 zusammenhängender Datenzeilen ist; wobei
sich der Produktionsdatensatz auf ein aktuelles Zeitintervall bezieht, während dessen die aktuellen Sensordaten in dem Produktionsdatensatz erzeugt worden sind, wobei das genannte aktuelle Zeitintervall Teil einer zeitkontinuierlichen Reihe aktueller Zeitintervalle ist, während jedes von diesen entsprechende aktuelle Sensordaten erzeugt worden sind; und wobei
das Erstellen des Produktionsdatensatzes ferner das Einbeziehen, in die Produktionseingabedaten des Produktionsdatensatzes, der aktuellen Sensordaten umfasst, die während einer Menge zusammenhängender aktueller Zeitintervalle erzeugt worden sind, die dem aktuellen Zeitintervall, auf das sich der Produktionsdatensatz bezieht, unmittelbar vorausgehen, wobei die genannte Menge zusammenhängender aktueller Zeitintervalle eine Anzahl zwischen 0 und 8 zusammenhängender aktueller Zeitintervalle ist.

8. Verfahren zum Vorhersagen von schlechtem Geruch nach einem der Ansprüche 1 bis 7, wobei das Bilden des Trainingsdatensatzes für jede der Datenzeilen ferner umfasst:
Einbeziehen, in die Beispieleingabedaten der Datenzeile, einer Datums-Zeit-Referenz, die das vergangene Zeitintervall darstellt, während dessen die vergangenen Sensordaten in der Datenzeile erzeugt wurden, in einer solchen Weise, dass das Prädiktormodell ferner in Abhängigkeit von der genannten Datums-Zeit-Referenz trainiert wird; und wobei
das Erstellen des Produktionsdatensatzes ferner umfasst:
Einbeziehen, in die Produktionseingabedaten, einer Datums-Zeit-Referenz, die das aktuelle Zeitintervall darstellt, während dessen die aktuellen Sensordaten in den Produktionseingabedaten erzeugt worden sind, um zu bewirken, dass das trainierte Prädiktormodell die Vorhersage schlechten Geruchs ferner in Abhängigkeit von der genannten Datums-Zeit-Referenz ausgibt.

9. Verfahren zum Vorhersagen von schlechtem Geruch nach einem der Ansprüche 1 bis 8, wobei die vergangenen Sensordaten in jeder der Datenzeilen vergangene Sensormessungen umfassen oder darstellen, die jeweils einen Ort umfassen, an dem sie erzeugt wurden, und die aktuellen Sensordaten in den Produktionseingabedaten aktuelle Sensormessungen umfassen oder darstellen, die jeweils einen Ort umfassen, an dem sie erzeugt worden sind; und wobei
das Bilden des Trainingsdatensatzes ferner das Clustern der vergangenen Sensormessungen nach ihrem Ort umfasst, um die vergangenen Sensordaten in unterschiedliche vordefinierte Regionen innerhalb des geografischen Gebiets zu territorialisieren, und
das Erstellen des Produktionsdatensatzes ferner das Clustern der aktuellen Sensormessungen nach ihrem Ort umfasst, um die aktuellen Sensordaten in unterschiedliche vordefinierte Regionen innerhalb des geografischen Gebiets zu territorialisieren.

10. Verfahren zum Vorhersagen von schlechtem Geruch nach einem der Ansprüche 1 bis 9, wobei jede der in dem geografischen Gebiet erzeugten Beobachtungen schlechten Geruchs einen Ort umfasst, an dem sie erzeugt wurde; und wobei
das Verfahren ferner das Clustern der genannten Beobachtungen schlechten Geruchs nach ihrem Ort umfasst, um sie in unterschiedliche vordefinierte Regionen innerhalb des geografischen Gebiets zu territorialisieren.

11. Verfahren zum Vorhersagen von schlechtem Geruch nach Anspruch 9 oder 10, wobei jede der vordefinierten Regionen innerhalb des geografischen Gebiets eine Industrieanlage umfasst, die einen industriellen Prozess durchführt oder implementiert, von dem bekannt ist, dass er potenziell schlechten Geruch oder eine Verschlimmerung desselben verursachen kann.

12. Verfahren zum Vorhersagen von schlechtem Geruch nach einem der Ansprüche 1 bis 11, ferner umfassend
Durchführen einer Dimensionsreduktion an den vergangenen Sensordaten, um diese zu komprimieren, während aussagekräftige Eigenschaften derselben beibehalten werden; und
Durchführen einer Dimensionsreduktion an den aktuellen Sensordaten, um diese zu komprimieren, während aussagekräftige Eigenschaften derselben beibehalten werden.

13. Verfahren zum Steuern eines industriellen Prozesses, der von/bei einer Industrieanlage in einem geografischen Gebiet durchgeführt wird, wobei das Verfahren umfasst:
Durchführen eines Verfahrens zum Vorhersagen von schlechtem Geruch nach einem der Ansprüche 1 bis 12, um eine Vorhersage schlechten Geruchs in dem geografischen Gebiet zu erhalten; und
Überprüfen, ob die erhaltene Vorhersage schlechten Geruchs ein zukünftiges Auftreten von schlechtem Geruch angibt, und in diesem Fall:
Überprüfen, ob bekannt ist, dass der industrielle Prozess als Ganzes in einem durch die aktuellen Sensordaten definierten Umwelt- oder meteorologischen Szenario schlechten Geruch verursacht, und in diesem Fall Stoppen des industriellen Prozesses, oder
Überprüfen, ob der industrielle Prozess eine Substanz erzeugt, von der bekannt ist, dass sie in einem durch die aktuellen Sensordaten definierten Umwelt- oder meteorologischen Szenario schlechten Geruch verursacht, und in diesem Fall Steuern des industriellen Prozesses, um das Erzeugen der genannten Substanz zu stoppen, ohne den industriellen Prozess zu stoppen; oder
Überprüfen, ob der industrielle Prozess das Verarbeiten einer Substanz umfasst, von der bekannt ist, dass sie in einem durch die aktuellen Sensordaten definierten Umwelt- oder meteorologischen Szenario schlechten Geruch verursacht, und in diesem Fall Steuern des industriellen Prozesses, um das Verarbeiten der genannten Substanz zu stoppen, ohne den industriellen Prozess zu stoppen.

14. Computerprogramm, umfassend Programmanweisungen, um zu bewirken, dass ein System oder Computersystem ein Verfahren nach einem der Ansprüche 1 bis 13 ausführt.

15. System zum Vorhersagen von schlechtem Geruch in einem geografischen Gebiet, wobei das System umfasst:
ein Bildungsmodul, das dazu konfiguriert ist, einen Trainingsdatensatz zu bilden, der Datenzeilen umfasst, die jeweils Beispieleingabedaten und Zielausgabedaten enthalten, wobei die Beispieleingabedaten vergangene Sensordaten enthalten, die in dem geografischen Gebiet von Umwelt- oder meteorologischen Sensoren während eines vergangenen Zeitintervalls erzeugt wurden, und die Zielausgabedaten vergangene Beobachtungsdaten enthalten, die Beobachtungen schlechten Geruchs darstellen und zumindest angeben, ob schlechter Geruch von Menschen wahrgenommen oder nicht wahrgenommen wurde, die in dem geografischen Gebiet während eines vergangenen Zeitraums erzeugt wurden, der nach dem vergangenen Zeitintervall liegt;
ein Konfigurationsmodul, das dazu konfiguriert ist, ein Rechenmodul zu konfigurieren, das rechnerisch ein Prädiktormodell implementiert, auf Grundlage eines Trainierens des Prädiktormodells unter Verwendung des Trainingsdatensatzes oder in Abhängigkeit von diesem;
ein Erstellungsmodul, das dazu konfiguriert ist, einen Produktionsdatensatz zu erstellen, der Produktionseingabedaten umfasst, die aktuelle Sensordaten enthalten, die in dem geografischen Gebiet von den Umwelt- oder meteorologischen Sensoren während eines aktuellen Zeitintervalls erzeugt wurden;
ein Bereitstellungsmodul, das dazu konfiguriert ist, den Produktionsdatensatz an das konfigurierte Rechenmodul bereitzustellen, um zu bewirken, dass das trainierte Prädiktormodell eine Vorhersage schlechten Geruchs ausgibt.

## Revendications

1. Procédé mis en œuvre par ordinateur de prédiction d'une mauvaise odeur dans une zone géographique, le procédé comprenant:
la formation d'un ensemble de données d'entraînement comprenant des lignes de données comprenant chacune des données d'entrée d'exemple et des données de sortie cibles, les données d'entrée d'exemple comprenant des données de capteur passées générées dans la zone géographique par des capteurs environnementaux ou météorologiques pendant un intervalle de temps passé, et les données de sortie cibles comprenant des données d'observation passées représentant des observations de mauvaise odeur, indiquant au moins si une mauvaise odeur a été perçue ou non perçue par des humains, générées dans la zone géographique pendant une période de temps passée postérieure à l'intervalle de temps passé;
la configuration d'un module de calcul mettant en œuvre informatiquement un modèle prédicteur sur la base de l'entraînement dudit modèle prédicteur à l'aide de l'ensemble de données d'entraînement ou en fonction de celui-ci;
la construction d'un ensemble de données de production comprenant des données d'entrée de production comprenant des données de capteur présentes générées dans la zone géographique par les capteurs environnementaux ou météorologiques pendant un intervalle de temps présent;
la fourniture de l'ensemble de données de production au module de calcul configuré afin d'amener le modèle prédicteur entraîné à produire une prédiction de mauvaise odeur.

2. Procédé de prédiction d'une mauvaise odeur selon la revendication 1, dans lequel les capteurs environnementaux ou météorologiques comprennent un ou plusieurs des types de capteurs suivants: capteur de rayonnement solaire, capteur d'indice ultraviolet, capteur de direction du vent, capteur de vitesse du vent, capteur de rafales de vent, capteur d'humidité, capteur de température, capteur de sensation thermique, capteur de point de rosée, capteur de pression atmosphérique, capteur de pluie ou de précipitations, capteurs de composés chimiques.

3. Procédé de prédiction d'une mauvaise odeur selon la revendication 1 ou 2, dans lequel la formation de l'ensemble de données d'entraînement comprend en outre, pour chacune des lignes de données:
l'obtention de données d'observation historiques représentant des observations de mauvaise odeur, indiquant au moins si une mauvaise odeur a été perçue ou non perçue par des humains, générées dans la zone géographique soit avant la période de temps passée, soit pendant et avant la période de temps passée pendant laquelle les données d'observation passées dans la ligne de données ont été générées;
l'exécution de transformations mathématiques sur les données d'observation historiques afin d'obtenir des données d'observation passées autocorrélées définissant des schémas de comportement rétrospectifs des données d'observation passées dans la ligne de données, et
l'inclusion des données d'observation passées autocorrélées dans les données d'entrée d'exemple de la ligne de données de telle manière que le modèle prédicteur soit en outre entraîné en fonction desdites données d'observation passées autocorrélées; et dans lequel
la construction de l'ensemble de données de production comprend en outre:
l'obtention de données d'observation antérieures représentant des observations de mauvaise odeur, indiquant au moins si une mauvaise odeur a été perçue ou non perçue par des humains, générées dans la zone géographique pendant et avant l'intervalle de temps présent,
l'exécution des transformations mathématiques sur les données d'observation antérieures afin d'obtenir des données d'observation antérieures autocorrélées définissant des schémas de comportement rétrospectifs des données d'observation antérieures, et
l'inclusion des données d'observation antérieures autocorrélées dans les données d'entrée de production afin d'amener le modèle prédicteur entraîné à produire la prédiction de mauvaise odeur en fonction en outre desdites données d'observation antérieures autocorrélées.

4. Procédé de prédiction d'une mauvaise odeur selon la revendication 3, dans lequel les données d'observation historiques obtenues pour chacune des lignes de données comprennent des observations dont chacune a été générée pendant une période de temps dans une série continue dans le temps de périodes de temps ayant une période de temps la plus récente, la série continue dans le temps comprenant la période de temps passée en tant que période de temps la plus récente et des périodes de temps successives antérieures à la période de temps passée, ou, alternativement, uniquement les périodes de temps successives antérieures à la période de temps passée, auquel cas la période de temps la plus récente est la période de temps successive précédant immédiatement dans le temps la période de temps passée; et
l'exécution des transformations mathématiques sur les données d'observation historiques comprend, pour chacune des lignes de données, un ou plusieurs des éléments suivants:
le calcul d'une somme cumulée d'observations indiquant l'occurrence d'une mauvaise odeur qui ont été générées au sein de la série continue dans le temps ou d'une partie continue dans le temps de celle-ci depuis sa période de temps la plus récente en remontant dans le temps jusqu'à une période de temps finale dans la série continue dans le temps,
le calcul d'une moyenne glissante d'observations indiquant l'occurrence d'une mauvaise odeur qui ont été générées dans une plage de temps prédéfinie dans la série continue dans le temps depuis sa période de temps la plus récente en remontant dans le temps,
la détermination d'un nombre de périodes de temps contiguës dans la série continue dans le temps depuis sa période de temps la plus récente en remontant dans le temps jusqu'à une période de temps finale, dans lequel les observations générées au sein de chacune desdites périodes de temps contiguës indiquent l'occurrence d'une mauvaise odeur et les observations générées au sein de ladite période de temps finale indiquent la non-occurrence d'une mauvaise odeur,
la détermination d'une durée couvrant des périodes de temps contiguës dans la série continue dans le temps depuis sa période de temps la plus récente en remontant dans le temps jusqu'à une période de temps finale, dans lequel les observations générées au sein de chacune desdites périodes de temps contiguës indiquent la non-occurrence d'une mauvaise odeur et les observations générées au sein de ladite période de temps finale indiquent l'occurrence d'une mauvaise odeur; et dans lequel
les données d'observation antérieures comprennent des observations dont chacune a été générée pendant un intervalle de temps dans une séquence continue dans le temps d'intervalles de temps ayant un intervalle de temps le plus récent, la séquence continue dans le temps comprenant l'intervalle de temps présent en tant qu'intervalle de temps le plus récent et des intervalles de temps successifs antérieurs à l'intervalle de temps présent, et
l'exécution des transformations mathématiques sur les données d'observation antérieures comprend, pour chacune des lignes de données, un ou plusieurs des éléments suivants:
le calcul d'une somme cumulée d'observations indiquant l'occurrence d'une mauvaise odeur qui ont été générées au sein de la séquence continue dans le temps ou d'une partie continue dans le temps de celle-ci depuis son intervalle de temps le plus récent en remontant dans le temps jusqu'à un intervalle de temps final dans la séquence continue dans le temps,
le calcul d'une moyenne glissante d'observations indiquant l'occurrence d'une mauvaise odeur qui ont été générées dans une plage de temps prédéfinie dans la séquence continue dans le temps depuis son intervalle de temps le plus récent en remontant dans le temps,
la détermination d'un nombre d'intervalles de temps contigus dans la séquence continue dans le temps depuis son intervalle de temps le plus récent en remontant dans le temps jusqu'à un intervalle de temps final, dans lequel les observations générées au sein de chacun desdits intervalles de temps contigus indiquent l'occurrence d'une mauvaise odeur et les observations générées au sein dudit intervalle de temps final indiquent la non-occurrence d'une mauvaise odeur,
la détermination d'une durée couvrant des intervalles de temps contigus dans la séquence continue dans le temps depuis son intervalle de temps le plus récent en remontant dans le temps jusqu'à un intervalle de temps final, dans lequel les observations générées au sein de chacun desdits intervalles de temps contigus indiquent la non-occurrence d'une mauvaise odeur et les observations générées au sein dudit intervalle de temps final indiquent l'occurrence d'une mauvaise odeur.

5. Procédé de prédiction d'une mauvaise odeur selon l'une quelconque des revendications 1 à 4, dans lequel la formation de l'ensemble de données d'entraînement comprend en outre, pour chacune des lignes de données:
l'obtention de données de capteur historiques générées dans la zone géographique par les capteurs environnementaux ou météorologiques soit avant l'intervalle de temps passé, soit pendant et avant l'intervalle de temps passé pendant lequel les données de capteur passées dans la ligne de données ont été générées,
l'exécution de conversions mathématiques sur les données de capteur historiques afin d'obtenir des données de capteur passées autocorrélées définissant des schémas de comportement rétrospectifs des données de capteur passées dans la ligne de données, et
l'inclusion des données de capteur passées autocorrélées dans les données d'entrée d'exemple de la ligne de données de telle manière que le modèle prédicteur soit en outre entraîné en fonction desdites données de capteur passées autocorrélées; et dans lequel
la construction de l'ensemble de données de production comprend en outre:
l'obtention de données de capteur antérieures générées dans la zone géographique par les capteurs environnementaux ou météorologiques soit avant l'intervalle de temps présent, soit pendant et avant l'intervalle de temps présent,
l'exécution des conversions mathématiques sur les données de capteur antérieures afin d'obtenir des données de capteur antérieures autocorrélées définissant des schémas de comportement rétrospectifs des données de capteur antérieures, et
l'inclusion des données de capteur antérieures autocorrélées dans les données d'entrée de production afin d'amener le modèle prédicteur entraîné à produire la prédiction de mauvaise odeur en fonction en outre desdites données de capteur antérieures autocorrélées.

6. Procédé de prédiction d'une mauvaise odeur selon la revendication 5, dans lequel les données de capteur historiques obtenues pour chacune des lignes de données comprennent des mesures de capteur dont chacune a été générée pendant une plage temporelle dans une série continue dans le temps de plages temporelles ayant une plage temporelle la plus récente, la série continue dans le temps comprenant l'intervalle de temps passé en tant que plage temporelle la plus récente et des plages temporelles successives antérieures à l'intervalle de temps passé ou, alternativement, uniquement les plages temporelles successives antérieures à l'intervalle de temps passé, auquel cas la plage temporelle la plus récente est la plage temporelle successive précédant immédiatement dans le temps l'intervalle de temps passé; et
l'exécution des conversions mathématiques sur les données de capteur historiques comprend, pour chacune des lignes de données, un ou plusieurs des éléments suivants:
le calcul, pour chaque type de mesure de capteur, d'une valeur moyenne et/ou d'un écart type et/ou d'une valeur logarithmique des mesures de capteur dudit type qui ont été générées au sein de la série continue dans le temps ou d'une partie continue dans le temps de celle-ci depuis sa plage temporelle la plus récente en remontant dans le temps jusqu'à une plage temporelle finale dans la série continue dans le temps,
la détermination, pour chaque type de mesure de capteur, d'une valeur maximale et/ou d'une valeur minimale des mesures de capteur dudit type qui ont été générées au sein de la série continue dans le temps ou d'une partie continue dans le temps de celle-ci depuis sa plage temporelle la plus récente en remontant dans le temps jusqu'à une plage temporelle finale dans la série continue dans le temps; et dans lequel
les données de capteur antérieures comprennent des valeurs de mesure de capteur dont chacune a été générée pendant un laps de temps dans une séquence continue dans le temps de laps de temps ayant un laps de temps le plus récent, la séquence continue dans le temps comprenant l'intervalle de temps présent en tant que laps de temps le plus récent et des laps de temps successifs antérieurs à l'intervalle de temps présent ou, alternativement, uniquement les laps de temps successifs antérieurs à l'intervalle de temps présent, auquel cas le laps de temps le plus récent est le laps de temps successif précédant immédiatement dans le temps l'intervalle de temps présent; et
l'exécution des conversions mathématiques sur les données de capteur antérieures comprend, pour chacune des lignes de données, un ou plusieurs des éléments suivants:
le calcul, pour chaque type de mesure de capteur, d'une valeur moyenne et/ou d'un écart type et/ou d'une valeur logarithmique des valeurs de mesure de capteur dudit type qui ont été générées au sein de la séquence continue dans le temps ou d'une partie continue dans le temps de celle-ci depuis son laps de temps le plus récent en remontant dans le temps jusqu'à un laps de temps final dans la séquence continue dans le temps,
la détermination, pour chaque type de mesure de capteur, d'une valeur maximale et/ou d'une valeur minimale des valeurs de mesure de capteur dudit type qui ont été générées au sein de la séquence continue dans le temps ou d'une partie continue dans le temps de celle-ci depuis son laps de temps le plus récent en remontant dans le temps jusqu'à un laps de temps final dans la séquence continue dans le temps.

7. Procédé de prédiction d'une mauvaise odeur selon l'une quelconque des revendications 1 à 6, dans lequel chacune des lignes de données dans l'ensemble de données d'entraînement se rapporte à un intervalle de temps passé pendant lequel les données de capteur passées dans la ligne de données ont été générées, et les intervalles de temps passés auxquels toutes les lignes de données se rapportent forment une série continue dans le temps d'intervalles de temps passés; dans lequel
la formation de l'ensemble de données d'entraînement comprend en outre, pour chacune des lignes de données,
l'inclusion dans les données d'entrée d'exemple de la ligne de données des données de capteur passées d'une quantité de lignes de données contiguës précédant immédiatement la ligne de données, ladite quantité de lignes de données contiguës étant un nombre compris entre 0 et 8 de lignes de données contiguës; dans lequel
l'ensemble de données de production se rapporte à un intervalle de temps présent pendant lequel les données de capteur présentes dans l'ensemble de données de production ont été générées, ledit intervalle de temps présent faisant partie d'une série continue dans le temps d'intervalles de temps présents pendant chacun desquels des données de capteur présentes correspondantes ont été générées; et dans lequel
la construction de l'ensemble de données de production comprend en outre l'inclusion dans les données d'entrée de production de l'ensemble de données de production des données de capteur présentes qui ont été générées pendant une quantité d'intervalles de temps présents contigus précédant immédiatement l'intervalle de temps présent auquel l'ensemble de données de production se rapporte, ladite quantité d'intervalles de temps présents contigus étant un nombre compris entre 0 et 8 d'intervalles de temps présents contigus.

8. Procédé de prédiction d'une mauvaise odeur selon l'une quelconque des revendications 1 à 7, dans lequel la formation de l'ensemble de données d'entraînement comprend en outre, pour chacune des lignes de données:
l'inclusion dans les données d'entrée d'exemple de la ligne de données d'une référence de date et d'heure représentant l'intervalle de temps passé pendant lequel les données de capteur passées dans la ligne de données ont été générées, de telle manière que le modèle prédicteur soit en outre entraîné en fonction de ladite référence de date et d'heure; et dans lequel
la construction de l'ensemble de données de production comprend en outre:
l'inclusion dans les données d'entrée de production d'une référence de date et d'heure représentant l'intervalle de temps présent pendant lequel les données de capteur présentes dans les données d'entrée de production ont été générées afin d'amener le modèle prédicteur entraîné à produire la prédiction de mauvaise odeur en fonction en outre de ladite référence de date et d'heure.

9. Procédé de prédiction d'une mauvaise odeur selon l'une quelconque des revendications 1 à 8, dans lequel les données de capteur passées dans chacune des lignes de données comprennent ou représentent des mesures de capteur passées comprenant chacune un emplacement où elle a été générée, et les données de capteur présentes dans les données d'entrée de production comprennent ou représentent des mesures de capteur présentes comprenant chacune un emplacement où elle a été générée; et dans lequel
la formation de l'ensemble de données d'entraînement comprend en outre le regroupement des mesures de capteur passées selon leur emplacement afin de territorialiser les données de capteur passées en différentes régions prédéfinies au sein de la zone géographique, et
la construction de l'ensemble de données de production comprend en outre le regroupement des mesures de capteur présentes selon leur emplacement afin de territorialiser les données de capteur présentes en différentes régions prédéfinies au sein de la zone géographique.

10. Procédé de prédiction d'une mauvaise odeur selon l'une quelconque des revendications 1 à 9, dans lequel chacune des observations de mauvaise odeur générées dans la zone géographique comprend un emplacement où elle a été générée; et dans lequel
le procédé comprend en outre le regroupement desdites observations de mauvaise odeur selon leur emplacement afin de les territorialiser en différentes régions prédéfinies au sein de la zone géographique.

11. Procédé de prédiction d'une mauvaise odeur selon la revendication 9 ou 10, dans lequel chacune des régions prédéfinies au sein de la zone géographique comprend une installation industrielle exécutant ou mettant en œuvre un procédé industriel qui est connu pour être susceptible de provoquer une mauvaise odeur ou une aggravation de celle-ci.

12. Procédé de prédiction d'une mauvaise odeur selon l'une quelconque des revendications 1 à 11, comprenant en outre:
l'exécution d'une réduction de dimensionnalité sur les données de capteur passées afin de les compresser tout en conservant des propriétés significatives de celles-ci; et
l'exécution d'une réduction de dimensionnalité sur les données de capteur présentes afin de les compresser tout en conservant des propriétés significatives de celles-ci.

13. Procédé de commande d'un procédé industriel effectué par/dans une installation industrielle dans une zone géographique, le procédé comprenant:
l'exécution d'un procédé de prédiction d'une mauvaise odeur selon l'une quelconque des revendications 1 à 12 afin d'obtenir une prédiction de mauvaise odeur dans la zone géographique; et
la vérification visant à déterminer si la prédiction de mauvaise odeur obtenue indique une occurrence future de mauvaise odeur et, dans ledit cas:
la vérification visant à déterminer si le procédé industriel dans son ensemble est connu pour provoquer une mauvaise odeur dans un scénario environnemental ou météorologique défini par les données de capteur présentes et, dans ledit cas, l'arrêt du procédé industriel, ou
la vérification visant à déterminer si le procédé industriel produit une substance qui est connue pour provoquer une mauvaise odeur dans un scénario environnemental ou météorologique défini par les données de capteur présentes et, dans ledit cas, la commande du procédé industriel afin de cesser de produire ladite substance sans arrêter le procédé industriel; ou
la vérification visant à déterminer si le procédé industriel comprend le traitement d'une substance qui est connue pour provoquer une mauvaise odeur dans un scénario environnemental ou météorologique défini par les données de capteur présentes et, dans ledit cas, la commande du procédé industriel afin de cesser de traiter ladite substance sans arrêter le procédé industriel.

14. Programme informatique comprenant des instructions de programme destinées à amener un système ou un système informatique à exécuter un procédé selon l'une quelconque des revendications 1 à 13.

15. Système de prédiction d'une mauvaise odeur dans une zone géographique, le système comprenant:
un module de formation configuré pour former un ensemble de données d'entraînement comprenant des lignes de données comprenant chacune des données d'entrée d'exemple et des données de sortie cibles, les données d'entrée d'exemple comprenant des données de capteur passées générées dans la zone géographique par des capteurs environnementaux ou météorologiques pendant un intervalle de temps passé, et les données de sortie cibles comprenant des données d'observation passées représentant des observations de mauvaise odeur, indiquant au moins si une mauvaise odeur a été perçue ou non perçue par des humains, générées dans la zone géographique pendant une période de temps passée postérieure à l'intervalle de temps passé;
un module de configuration configuré pour configurer un module de calcul mettant en œuvre informatiquement un modèle prédicteur sur la base de l'entraînement dudit modèle prédicteur à l'aide de l'ensemble de données d'entraînement ou en fonction de celui-ci;
un module de construction configuré pour construire un ensemble de données de production comprenant des données d'entrée de production comprenant des données de capteur présentes générées dans la zone géographique par les capteurs environnementaux ou météorologiques pendant un intervalle de temps présent;
un module de fourniture configuré pour fournir l'ensemble de données de production au module de calcul configuré afin d'amener le modèle prédicteur entraîné à produire une prédiction de mauvaise odeur.
